(19) Europäisches Patentamt
European Patent Office
Office européen des brevets

(11) **EP 4 386 094 A1**

(12) **EUROPEAN PATENT APPLICATION**
published in accordance with Art. 153(4) EPC

(43) Date of publication:
**19.06.2024 Bulletin 2024/25**

(21) Application number: **22872745.9**

(22) Date of filing: **09.09.2022**

(51) International Patent Classification (IPC):
$C21D\ 9/00^{(2006.01)}$  $C21D\ 9/46^{(2006.01)}$
$C22C\ 38/00^{(2006.01)}$  $C22C\ 38/16^{(2006.01)}$
$C22C\ 38/60^{(2006.01)}$  $C21D\ 1/18^{(2006.01)}$

(52) Cooperative Patent Classification (CPC):
**C21D 1/18; C21D 9/00; C21D 9/46; C22C 38/00;
C22C 38/16; C22C 38/60**

(86) International application number:
**PCT/JP2022/033921**

(87) International publication number:
**WO 2023/047991 (30.03.2023 Gazette 2023/13)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **22.09.2021 JP 2021154620**

(71) Applicant: **JFE Steel Corporation
Tokyo 100-0011 (JP)**

(72) Inventors:
• **YAMAZAKI, Kazuhiko
Tokyo 100-0011 (JP)**
• **TADA, Masaki
Tokyo 100-0011 (JP)**

(74) Representative: **Hoffmann Eitle
Patent- und Rechtsanwälte PartmbB
Arabellastraße 30
81925 München (DE)**

(54) **STEEL SHEET FOR HOT-PRESSING, METHOD FOR PRODUCING SAME, HOT-PRESSED MEMBER, AND METHOD FOR PRODUCING SAME**

(57)    It is an object of the present invention to provide a steel sheet for hot pressing to produce a hot-pressed member with a tensile strength TS of 1760 MPa or more and high low-temperature toughness and delayed fracture resistance, a method for producing the steel sheet, a hot-pressed member with the above characteristics, and a method for producing the hot-pressed member. The steel sheet for hot pressing contains specific components, wherein ferrite constitutes 30% or more and 90% or less by area, pearlite constitutes 10% or more and 70% or less by area, and a remaining microstructure constitutes 5% or less by area, the ferrite has an average aspect ratio in the range of 2.0 or more and 12.0 or less, and the ferrite has an average minor axis length of 5.0 $\mu$m or less, the steel sheet contains 500 /$\mu$m$^3$ or more and 6000 /$\mu$m$^3$ or less of Ti-Nb complex precipitates with a grain size of 3 nm or more and 50 nm or less, and the steel sheet has a dislocation density of 1.0 x 10$^{15}$ /m$^2$ or more.

EP 4 386 094 A1

**Description**

Technical Field

The present invention relates to a steel sheet for hot pressing that is a high-strength press part mainly used in the automobile industry and that is heated and hot-pressed in a die assembly composed of a die and a punch to be used particularly for a hot-pressed member with a tensile strength (TS) of 1760 MPa or more, a method for producing the steel sheet, a hot-pressed member, and a method for producing the hot-pressed member.

Background Art

In recent years, automobile exhaust emission control has been strengthened from the perspective of global environmental conservation. Under such circumstances, the improvement of the fuel efficiency of automobiles has become an important issue, and there is a need for higher-strength and thinner automotive parts. As a means for increasing the strength and reducing the thickness of an automotive part, there is known a means for using a steel sheet as a material of the automotive part and forming the steel sheet into a desired part shape by hot press quenching. In the hot press quenching, a blank (steel sheet) heated to an austenite single phase region is hot-pressed into a desired shape using a die assembly and is quenched by heat transfer in the die assembly.

As described above, in the hot press quenching, a steel sheet heated to a high-temperature region, that is, a steel sheet in a state of being softened and easy to process is press-formed, and the steel sheet can therefore be formed into a complicated part shape. Furthermore, the steel sheet is quenched while being formed into a desired part shape, and a hot-pressed member with very high strength, for example, with a TS of 1760 MPa or more can be produced after the forming. Furthermore, due to the quenching in the die assembly, heat treatment distortion can be reduced, and a hot-pressed member with high dimensional accuracy can be produced.

Patent Literature 1 proposes a method for producing a hot-pressed member with a tensile strength TS of 1780 MPa or more after hot pressing, wherein prior-austenite grains in the hot-pressed member have an average grain size of 7.5 $\mu$m or less and a martensite volume fraction of 95% or more, the number of Nb and Ti precipitates with a grain size of less than 0.10 $\mu$m is 10 or more on average per 100 $\mu$m$^2$ of the cross section of the steel sheet within the range of 100 $\mu$m or less in the thickness direction from a surface of the steel sheet, and the B concentration at prior-austenite grain boundaries is 3.0 times or more the B concentration at a position 5 nm away from the grain boundaries. Patent Literature 2 proposes a method for producing a hot-pressed part with a TS of 1800 MPa or more, wherein the prior-austenite average grain size is 20 $\mu$m, and the number of Nb carbides of 1 to 200 nm is 50 /$\mu$m$^2$ or more.

Citation List

Patent Literature

PTL 1: International Publication No. WO 2019-003449
PTL 2: Japanese Unexamined Patent Application Publication No. 2007-302937

Summary of Invention

Technical Problem

However, as the strength of a member increases, the material properties, such as low-temperature toughness and delayed fracture resistance, generally deteriorate. Thus, to apply a reinforced member to an automobile, the member is required to be resistant to brittle fracture even when subjected to an impact due to a collision or the like after being attached to the automobile as a member after hot press forming. In particular, to ensure impact resistance in cold regions, it is indispensable to improve low-temperature toughness. Furthermore, it is necessary to prevent the occurrence of delayed fracture (hydrogen embrittlement) due to hydrogen entering from the use environment, that is, to improve delayed fracture resistance. Although a steel sheet containing carbide dispersed in steel is sometimes used for hot pressing to improve delayed fracture resistance, edge cracking may occur during blanking (shearing or punching of the steel sheet) before hot pressing.

In the method described in Patent Literature 1, the control of the microstructure of a steel sheet before hot pressing, particularly the control of the number density of precipitates, is not appropriate, the number density of Ti precipitates and Nb precipitates after hot pressing is small, and the delayed fracture resistance is not sufficient.

In the method described in Patent Literature 2, the control of the microstructure before hot pressing, particularly the control of the number density of precipitates, is not appropriate, and edge cracking is likely to occur during blanking before hot pressing.

Accordingly, it is an object of the present invention to provide a steel sheet for hot pressing to produce a hot-pressed member with a tensile strength TS of 1760 MPa or more and high low-temperature toughness and delayed fracture resistance, a method for producing the steel sheet, a hot-pressed member with the above characteristics, and a method for producing the hot-pressed member.

Solution to Problem

As a result of extensive studies, the present inventor has completed the present invention by finding that the object can be achieved by adopting the following configurations.

[1] A steel sheet for hot pressing having a chemical composition, on a mass percent basis, of

C: 0.26% or more and 0.50% or less,
Si: 0.01% or more and less than 1.0%,
Mn: 1.0% or more and 3.0% or less,
P: 0.10% or less,
S: 0.010% or less,
Al: 0.01% or more and 1.5% or less,
N: 0.010% or less,
Nb: 0.005% or more and 0.10% or less,
B: 0.0005% or more and 0.020% or less,
Ti: 3.4N + 0.01% or more and 3.4N + 0.2% or less [wherein N denotes the N content (% by mass)], and
a remainder composed of Fe and incidental impurities,
wherein ferrite constitutes 30% or more and 90% or less by area, pearlite constitutes 10% or more and 70% or less by area, and a remaining microstructure constitutes 5% or less by area,
the ferrite has an average aspect ratio in the range of 2.0 or more and 12.0 or less, and the ferrite has an average minor axis length of 5.0 $\mu$m or less,
the steel sheet contains 500 /$\mu$m$^3$ or more and 6000 /$\mu$m$^3$ or less of Ti-Nb complex precipitates with a grain size of 3 nm or more and 50 nm or less, and
the steel sheet has a dislocation density of $1.0 \times 10^{15}$ /m$^2$ or more.

[2] The steel sheet for hot pressing according to [1], wherein the chemical composition further contains, on a mass percent basis, at least one selected from the group consisting of

| | |
|---|---|
| Cr: | 1.0% or less, |
| Cu: | 1.0% or less, |
| Ni: | 1.0% or less, |
| Sb: | 0.10% or less, and |
| Sn: | 0.10% or less. |

[3] The steel sheet for hot pressing according to [1] or [2], wherein the chemical composition further contains, on a mass percent basis, at least one selected from the group consisting of

Mo: 1.0% or less,
V: 1.0% or less,
Bi: 0.10% or less,
Ca: 0.10% or less,
Mg: 0.10% or less,
REM: 0.10% or less,
Co: 0.10% or less,
Zr: 0.10% or less,
Ta: 0.10% or less,
W: 0.10% or less, and
Zn: 0.10% or less.

EP 4 386 094 A1

[4] The steel sheet for hot pressing according to any one of [1] to [3], including a Zn-coated layer on a surface thereof.
[5] A method for producing the steel sheet for hot pressing according to any one of [1] to [3], including:

heating a steel material to 1150°C or more;
then, after rough rolling,
performing hot rolling including finish rolling such that a total rolling reduction ratio below an RC temperature defined by the formula (1) in the finish rolling is 20% or more and 80% or less and a finish rolling end temperature is (RC - 200°C) or more and (RC - 20°C) or less;
then starting cooling within 2.0 seconds after completion of the finish rolling;
performing cooling at an average cooling rate of 30°C/s or more to a cooling stop temperature of 550°C or more and 700°C or less;
performing coiling at the cooling stop temperature;
then cooling the steel sheet from the cooling stop temperature to 500°C at an average cooling rate of 50°C/h or less; and
then, after pickling the steel sheet, cold-rolling the steel sheet at a rolling reduction ratio of 20% or more and 80% or less,

$$RC\ (°C) = 850 + 100 \times C + 100 \times N + 10 \times Mn + 700 \times Ti + 5000 \times B + 10 \times Cr + 50 \times Mo + 2000 \times Nb + 150 \times V$$

wherein each element symbol in the formula (1) is a corresponding element content (% by mass) of steel, and for an element not contained in the steel, the element symbol in the formula is 0.

[6] The method for producing the steel sheet for hot pressing according to [5], wherein a surface of the steel sheet is subjected to Zn-coating treatment.
[7] A hot-pressed member containing:

the chemical composition of the steel sheet for hot pressing according to any one of [1] to [3],
wherein martensite, tempered martensite, and bainite constitute 90% or more and 100% or less by area in total, and the remaining microstructure constitutes 10% or less by area,
the hot-pressed member has a prior-austenite average grain size of 7.0 $\mu$m or less,
the hot-pressed member contains 500 /$\mu m^3$ or more and 6000 /$\mu m^3$ or less of Ti-Nb complex precipitates with a grain size of 3 nm or more and 50 nm or less, and
the hot-pressed member has a tensile strength of 1760 MPa or more.

[8] The hot-pressed member according to [7], having a Zn-coated layer on a surface thereof.
[9] A method for producing a hot-pressed member, comprising: trimming the steel sheet for hot pressing according to any one of [1] to [4] by shearing, heating the steel sheet to a temperature of an $A_{c3}$ transformation point or higher and 1000°C or less at an average heating rate of 3°C/s or more and 200°C/s or less, holding the steel sheet in this temperature range for 0 seconds or more and 300 seconds or less, and then hot-pressing the steel sheet at an Ms temperature or higher.

Advantageous Effects of Invention

The present invention can provide a hot-pressed member with a tensile strength TS of 1760 MPa or more and high low-temperature toughness and delayed fracture resistance and can achieve the above characteristics by using a steel sheet for hot pressing to produce the hot-pressed member.
The use of a hot-pressed member according to the present invention for a structural part, a structural member, a chassis, such as a suspension, of an automobile can reduce the weight of the automobile body while ensuring the safety of the automobile. This can contribute to reducing the effects on the environment.

Description of Embodiments

A steel sheet for hot pressing, a method for producing the steel sheet, a hot-pressed member, and a method for producing the hot-pressed member according to the present invention are described below.
In the present description, a numerical range expressed by using "to" means a range including numerical values described before and after "to" as a lower limit and an upper limit.

(1) Steel Sheet for Hot Pressing

A hot-pressed member according to the present invention is produced by using a steel sheet for hot pressing with a chemical composition, on a mass percent basis, of C: 0.26% or more and 0.50% or less, Si: 0.01% or more and less than 1.0%, Mn: 1.0% or more and 3.0% or less, P: 0.10% or less, S: 0.010% or less, Al: 0.01% or more and 1.5% or less, N: 0.010% or less, Nb: 0.005% or more and 0.10% or less, B: 0.0005% or more and 0.020% or less, Ti: 3.4N + 0.01% or more and 3.4N + 0.2% or less [wherein N denotes the N content (% by mass)], and a remainder composed of Fe and incidental impurities,

wherein ferrite constitutes 30% or more and 90% or less by area, pearlite constitutes 10% or more and 70% or less by area, and a remaining microstructure constitutes 5% or less by area,
the ferrite has an average aspect ratio in the range of 2.0 or more and 12.0 or less, and the ferrite has an average minor axis length of 5.0 $\mu$m or less,
the steel sheet contains 500 /$\mu$m$^3$ or more and 6000 /$\mu$m$^3$ or less of Ti-Nb complex precipitates with a grain size of 3 nm or more and 50 nm or less, and
the steel sheet has a dislocation density of $1.0 \times 10^{15}$ /m$^2$ or more.

First, the reasons for limiting the chemical composition of the steel sheet for hot pressing used for the hot-pressed member are described. Unless otherwise specified, "%" in a chemical composition, as used herein, refers to "% by mass".

C: 0.26% or more and 0.50% or less

C is an element effective for reinforcement of steel and is a very important element for strengthening martensite, tempered martensite, and bainite after hot pressing to increase the strength of the hot-pressed member. To ensure a TS of 1760 MPa or more after hot pressing, at least 0.26% is required. Thus, the C content is 0.26% or more. The C content is preferably 0.28% or more, more preferably 0.30% or more. The C content is still more preferably 0.32% or more. On the other hand, a C content of more than 0.50% results in too high strength after hot pressing and deterioration of one or more of the delayed fracture resistance and the low-temperature toughness. Thus, the C content is 0.50% or less. The C content is preferably 0.45% or less, more preferably 0.40% or less. The C content is still more preferably 0.38% or less.

Si: 0.01% or more and less than 1.0%

Si contributes to solid-solution strengthening, reduces the precipitation of cementite, improves the temper softening resistance of martensite during hot pressing, and contributes to improving the strength of the hot-pressed member. To produce such effects, the Si content is 0.01% or more. The Si content is preferably 0.1% or more, more preferably 0.2% or more. The Si content is still more preferably 0.3% or more. On the other hand, Si is a ferrite-forming element, and a Si content of 1.0% or more results in the hot-pressed member with an increased ferrite fraction and lower low-temperature toughness. Thus, the Si content is less than 1.0%. The Si content is preferably 0.9% or less, more preferably 0.8% or less. The Si content is still more preferably 0.7% or less, still more preferably 0.6% or less.

Mn: 1.0% or more and 3.0% or less

Mn contributes to solid-solution strengthening and also improves the hardenability, promotes the formation of martensite, tempered martensite, and bainite during hot pressing, and thereby contributes to improving the toughness of the hot-pressed member. To produce such effects, the Mn content is 1.0% or more. The Mn content is preferably 1.2% or more, more preferably 1.4% or more, still more preferably 1.5% or more. The Mn content is most preferably 1.6% or more. On the other hand, a Mn content of more than 3.0% results in suppressed ferrite transformation after coiling in hot rolling and an insufficient amount of Ti-Nb complex precipitates. This also results in a hot-rolled steel sheet of hard martensite, which is difficult to cold-roll. Thus, the Mn content is 3.0% or less. The Mn content is preferably 2.5% or less, more preferably 2.0% or less. The Mn content is still more preferably 1.9% or less, most preferably 1.8% or less.

P: 0.10% or less (including 0%)

P contributes to improving the strength of the hot-pressed member by solid-solution strengthening. However, P segregates at grain boundaries and reduces the low-temperature toughness. Thus, the P content is preferably minimized and may be 0.10% or less. Thus, the P content is 0.10% or less. The P content is preferably 0.050% or less, more preferably 0.020% or less. The lower limit may be, but is not limited to, 0%.

S: 0.010% or less (including 0%)

S combines with Ti or Mn and forms a coarse sulfide, thereby reducing the low-temperature toughness and the delayed fracture resistance of the hot-pressed member. Thus, the S content is preferably minimized and may be 0.010% or less. Thus, the S content is 0.010% or less. The S content is preferably 0.0050% or less, more preferably 0.0030% or less. The lower limit may be, but is not limited to, 0%.

Al: 0.01% or more and 1.5% or less

Al acts as a deoxidizing agent and is effective in improving the cleanliness of the hot-pressed member. An excessively small amount of Al sometimes results in an insufficient effect. Thus, the Al content is 0.01% or more. The Al content is preferably 0.015% or more, more preferably 0.020% or more. On the other hand, Al is a ferrite-forming element, and an Al content of more than 1.5% results in the hot-pressed member with an increased ferrite fraction and lower low-temperature toughness. Thus, the Al content is 1.5% or less. The Al content is preferably 0.7% or less, more preferably 0.1% or less. The Al content is still more preferably 0.080% or less.

N: 0.010% or less (including 0%)

N combines with an element that forms a nitride, is precipitated as a nitride, and contributes to grain refinement. However, N tends to combine with Ti at high temperatures and form a coarse nitride, and an excessively high N content results in the hot-pressed member with lower low-temperature toughness and delayed fracture resistance. Thus, the N content is 0.010% or less. The N content is preferably 0.008% or less, more preferably 0.006% or less. The lower limit may be, but is not limited to, 0%.

Nb: 0.005% or more and 0.10% or less

Nb improves the strength of the hot-pressed member by precipitation strengthening or solid-solution strengthening. Nb is an element that is effective in forming complex precipitates with Ti, suppressing coarsening of austenite grains when a steel sheet to be subjected to hot pressing is heated to the $Ac_3$ transformation point ($Ac_3$ temperature) or higher, and decreasing the prior-austenite grain size. Furthermore, Nb is an important element to improve the delayed fracture resistance by Ti-Nb complex precipitates in the hot-pressed member. To produce these effects, the Nb content is 0.005% or more. The Nb content is preferably 0.01% or more, more preferably 0.02% or more.
On the other hand, an excessively high Nb content results in the formation of a coarse carbonitride and the hot-pressed member with lower low-temperature toughness and delayed fracture resistance. Thus, the Nb content is 0.10% or less. The Nb content is preferably 0.08% or less, more preferably 0.06% or less. The Nb content is still more preferably 0.05% or less.

B: 0.0005% or more and 0.020% or less

B segregates in prior-austenite grain boundaries, reduces the formation of ferrite, promotes the formation of martensite, tempered martensite, and bainite during hot pressing, and contributes to improving the strength of a steel sheet. To produce these effects, the B content is 0.0005% or more. The B content is preferably 0.0010% or more, more preferably 0.0015% or more. On the other hand, these effects are saturated at an excessively high B content. Thus, the B content is 0.020% or less. The B content is preferably 0.015% or less, more preferably 0.010% or less, still more preferably 0.0050% or less.

Ti: 3.4N + 0.01% or more and 3.4N + 0.2% or less [wherein N denotes the N content (% by mass)]

Ti improves the strength of the hot-pressed member by precipitation strengthening or solid-solution strengthening. Ti forms a nitride in an austenite phase high-temperature region (a high-temperature region in an austenite phase and a high-temperature region higher in temperature than the austenite phase (a step of casting)). This reduces the precipitation of BN and results in B in a solid solution state. This provides hardenability necessary for the formation of martensite, tempered martensite, and bainite during hot pressing and contributes to improving the strength. Furthermore, Ti is a very important element that is effective in forming Ti-Nb complex precipitates, suppressing coarsening of austenite grains when a steel sheet to be subjected to hot pressing is heated to the $Ac_3$ temperature or higher, and decreasing the prior-austenite grain size. Furthermore, Ti is an important element to improve the delayed fracture resistance by Ti-Nb complex precipitates in the hot-pressed member. To produce these effects, the Ti content is 3.4N + 0.01% or more. More preferably, the Ti content is 3.4N + 0.02% or more. On the other hand, an excessively high Ti content results in the formation of a coarse carbonitride and the hot-pressed member with lower low-temperature toughness and delayed fracture resistance. Thus, the Ti content is 3.4N + 0.2% or less. The Ti content is preferably 3.4N + 0.1% or less, more preferably 3.4N + 0.06% or less.

The chemical composition of the steel sheet for hot pressing may further contain at least one selected from the group consisting of Cr, Cu, Ni, Sb, and Sn in the following amounts.

Cr: 1.0% or less

Cr impairs the chemical convertibility and coatability of a hot-pressing material and the hot-pressed member, reduces the corrosion resistance, and thereby reduces the delayed fracture resistance. Thus, when Cr is contained, the Cr content is 1.0% or less. The Cr content is preferably 0.5% or less. The Cr content is more preferably 0.4% or less. On the other hand, Cr contributes to solid-solution strengthening, promotes the formation of martensite, tempered martensite, and bainite by improving hardenability during hot pressing, and contributes to improving the strength. To produce these effects, when Cr is contained, the Cr content is preferably 0.01% or more, more preferably 0.10% or more. The Cr content is still more preferably 0.15% or more.

Cu: 1.0% or less

Cu contributes to solid-solution strengthening, promotes the formation of martensite, tempered martensite, and bainite by improving hardenability, and contributes to improving the strength of the hot-pressed member. Furthermore, Cu can improve the corrosion resistance and consequently the delayed fracture resistance and can therefore be added as required. On the other hand, an excessively high Cu content results in the saturation of these effects and is likely to cause a surface defect. Thus, when Cu is contained, the Cu content is 1.0% or less. The Cu content is preferably 0.50% or less. To produce these effects, when Cu is contained, the Cu content is preferably 0.01% or more, more preferably 0.05% or more. The Cu content is still more preferably 0.10% or more.

Ni: 1.0% or less

Ni contributes to solid-solution strengthening, promotes the formation of martensite, tempered martensite, and bainite by improving hardenability during hot pressing, and contributes to improving the strength. Furthermore, like Cu, Ni can improve the corrosion resistance and consequently the delayed fracture resistance and can therefore be added as required. On the other hand, these effects tend to be saturated at an excessively high Ni content. Furthermore, because Ni is an expensive element, when Ni is contained, the Ni content is 1.0% or less from an economic point of view. The Ni content is preferably 0.50% or less. To produce these effects, when Ni is contained, the Ni content is preferably 0.01% or more, more preferably 0.05% or more.

Sb: 0.10% or less

An excessively high Sb content may result in increased rolling force during the production of a hot-pressing material and a decrease in productivity. Thus, when Sb is contained, the Sb content is 0.10% or less. The Sb content is preferably 0.050% or less, more preferably 0.020% or less. On the other hand, while a steel material, such as a slab, is heated, Sb inhibits nitriding of the surface of the steel material and reduces the precipitation of BN in a surface layer portion of the steel material. Furthermore, the presence of a solid solution B provides hardenability necessary for the formation of martensite, tempered martensite, and bainite in a surface layer portion of the hot-pressed member and thereby improves the strength of the hot-pressed member. To produce such effects, when Sb is contained, the Sb content is preferably 0.0002% or more, more preferably 0.0010% or more.

Sn: 0.10% or less

An excessively high Sn content may result in lower hot workability and the occurrence of cracking during hot pressing. Thus, when Sn is contained, the Sn content is 0.10% or less. The Sn content is preferably 0.050% or less, more preferably 0.020% or less. On the other hand, like Cu and Ni, Sn can improve the corrosion resistance and consequently the delayed fracture resistance and can therefore be added as required. To produce these effects, when Sn is contained, the Sn content is preferably 0.0002% or more, more preferably 0.0010% or more.

The chemical composition of the steel sheet for hot pressing may further contain at least one selected from the group consisting of Mo, V, Bi, Ca, Mg, REM, Co, Zr, Ta, W, and Zn in the following amounts.

Rare earth metal (REM) is a generic name of 17 elements in total: 2 elements of scandium (Sc) and yttrium (Y) and 15 elements (lanthanoids) from lanthanum (La) to lutetium (Lu). The REM content is the total of these 17 element contents.

Mo: 1.0% or less

As in Cr, an excessively high Mo content results in a hot-pressing material and the hot-pressed member with lower chemical convertibility and coatability, lower corrosion resistance, and lower delayed fracture resistance. Thus, when Mo is contained, the Mo content is 1.0% or less. The Mo content is preferably 0.50% or less. On the other hand, Mo promotes the formation of martensite, tempered martensite, and bainite by improving hardenability during hot pressing and contributes to improving the strength of a steel sheet. Furthermore, like Ti, Mo is an element that is effective in forming a carbonitride, suppressing coarsening of austenite grains when a steel sheet to be subjected to hot pressing is heated to the $Ac_3$ temperature or higher, and decreasing the prior-austenite grain size. To produce such effects, when Mo is contained, the Mo content is preferably 0.01% or more. The Mo content is more preferably 0.05% or more.

V: 1.0% or less

An excessively high V content results in the formation of a coarse carbonitride and the hot-pressed member with lower low-temperature toughness and delayed fracture resistance. Thus, when V is contained, the V content is 1.0% or less. The V content is preferably 0.50% or less. The V content is more preferably 0.30% or less. On the other hand, V improves the strength of the hot-pressed member by precipitation strengthening or solid-solution strengthening. Furthermore, like Ti, V is an element that is effective in forming a carbonitride, suppressing coarsening of austenite grains when a steel sheet to be subjected to hot pressing is heated to the $Ac_3$ temperature or higher, and decreasing the prior-austenite grain size. To produce these effects, when V is contained, the V content is preferably 0.01% or more, more preferably 0.10% or more.

Bi: 0.10% or less

An excessively high Bi content results in the formation of a coarse oxide and the hot-pressed member with lower low-temperature toughness and delayed fracture resistance. Thus, when Bi is contained, the Bi content is 0.10% or less. The Bi content is preferably 0.050% or less, more preferably 0.020% or less. On the other hand, Bi is an element that is effective in homogenizing a substitutional element, such as Mn, in martensite, tempered martensite, and bainite of the hot-pressed member and improving the low-temperature toughness. To produce such effects, when Bi is contained, the Bi content is 0.0002% or more, preferably 0.0010% or more.

Ca: 0.10% or less, Mg: 0.10% or less, REM: 0.10% or less

An excessively high Ca, Mg, or REM content results in an increase of an inclusion and the hot-pressed member with lower low-temperature toughness and delayed fracture characteristics. Thus, when one or two or more of these elements are contained, each content is 0.10% or less. Each content is preferably 0.050% or less, more preferably 0.020% or less, still more preferably 0.010% or less. On the other hand, Ca, Mg, and REM control the shape of an oxide or a sulfide, suppress the generation of a coarse inclusion, and thereby improve the low-temperature toughness and the delayed fracture resistance of the hot-pressed member. To produce these effects, when one or two or more of these elements are contained, each element content is preferably 0.0002% or more, more preferably 0.0010% or more.

Co: 0.10% or less, Zr: 0.10% or less

An excessively high Co or Zr content results in lower low-temperature toughness. Thus, when one or two of these elements are contained, each content is 0.10% or less. Each content is preferably 0.050% or less, more preferably 0.020% or less. On the other hand, like Cu and Ni, Co and Zr can improve the corrosion resistance and consequently the delayed fracture resistance and can therefore be added as required. To produce such effects, when one or two of these elements are contained, each content is preferably 0.0002% or more, more preferably 0.0010% or more.

Ta: 0.10% or less, W: 0.10% or less

An excessively high Ta or W content results in the formation of a coarse carbide and the hot-pressed member with lower low-temperature toughness and delayed fracture resistance. Thus, when one or two of these elements are contained, each content is 0.10% or less. Each content is preferably 0.050% or less, more preferably 0.020% or less. On the other hand, Ta and W form an alloy carbide, contribute to precipitation strengthening, and contribute to improving the strength of the hot-pressed member. To produce such effects, when one or two of these elements are contained, each content is preferably 0.0002% or more, more preferably 0.0010% or more.

Zn: 0.10% or less

An excessively high Zn content results in lower low-temperature toughness. Thus, when Zn is contained, the Zn content is 0.10% or less. The Zn content is preferably 0.080% or less, more preferably 0.060% or less. On the other hand, Zn promotes the formation of martensite, tempered martensite, and bainite by improving hardenability during hot pressing and contributes to improving the strength of a steel sheet. To produce such effects, when Zn is contained, the Zn content is preferably 0.0002% or more, more preferably 0.0010% or more.

In the chemical composition of the steel sheet for hot pressing, the remainder other than these components (elements) is composed of Fe and incidental impurities. The incidental impurities are, for example, Ag, As, O, and the like, and the total of these contents may be 0.5% or less.

Next, the reasons for limiting the microstructure of the steel sheet for hot pressing are described. The steel sheet for hot pressing has a microstructure in which ferrite constitutes 30% or more and 90% or less by area, pearlite constitutes 10% or more and 70% or less by area, and a remaining microstructure constitutes 5% or less by area, the ferrite has an average aspect ratio in the range of 2.0 or more and 12.0 or less, and the ferrite has an average minor axis length of 5.0 $\mu$m or less, and the steel sheet contains 500 /$\mu$m$^3$ or more and 6000 /$\mu$m$^3$ or less of Ti-Nb complex precipitates with a grain size of 3 nm or more and 50 nm or less.

Ferrite: 30% or more and 90% or less by area, pearlite: 10% or more and 70% or less by area, remaining microstructure: 5% or less by area, average aspect ratio of ferrite: 2.0 or more and 12.0 or less, and average minor axis length of ferrite: 5.0 $\mu$m or less

When ferrite constitutes less than 30% by area, a sufficient number of Ti-Nb complex precipitates cannot be formed, and the hot-pressed member cannot have high delayed fracture resistance. Thus, the ferrite constitutes 30% or more, preferably 35% or more, more preferably 40% or more by area.

More than 90% by area of ferrite may cause edge cracking in the blanking of the steel sheet for hot pressing. Thus, ferrite constitutes 90% or less, preferably 80% or less, more preferably 70% or less by area. Ferrite still more preferably constitutes 65% or less, most preferably 60% or less by area.

Less than 10% by area of pearlite may cause edge cracking in the blanking of the steel sheet for hot pressing. Thus, pearlite constitutes 10% or more, preferably 20% or more, more preferably 30% or more by area. Pearlite still more preferably constitutes 35% or more by area. On the other hand, more than 70% by area of pearlite results in an insufficient number of Ti-Nb complex precipitates and the hot-pressed member with low delayed fracture resistance. Thus, pearlite constitutes 70% or less, preferably 60% or less, more preferably 50% or less by area. The remaining microstructure of the steel sheet for hot pressing can be bainite, martensite, retained austenite, or the like, and these may constitute 5% or less by area in total. The lower limit of these may be 0%.

When the ferrite has an average aspect ratio of less than 2.0, the hot-pressed member sometimes cannot have a prior-austenite average grain size of 7.0 $\mu$m or less and cannot have high low-temperature toughness. Thus, the ferrite has an average aspect ratio of 2.0 or more, preferably 2.5 or more, more preferably 3.0 or more, still more preferably 4.0 or more. The ferrite most preferably has an average aspect ratio of 4.5 or more. On the other hand, ferrite with an average aspect ratio of more than 12.0 may cause edge cracking in the blanking of the steel sheet for hot pressing. Thus, the ferrite has an average aspect ratio of 12.0 or less, preferably 10.0 or less, more preferably 9.0 or less, still more preferably 8.0 or less. The ferrite most preferably has an average aspect ratio of 7.0 or less.

When the ferrite has an average minor axis length of more than 5.0 $\mu$m, the hot-pressed member sometimes cannot have a prior-austenite average grain size of 7.0 $\mu$m or less and cannot have high low-temperature toughness. Thus, the ferrite has an average minor axis length of 5.0 $\mu$m or less, preferably 4.0 $\mu$m or less, more preferably 3.0 $\mu$m or less. The average minor axis length of the ferrite may have any lower limit. However, it is difficult to control the average minor axis length of less than 0.5 $\mu$m, and the average minor axis length is therefore preferably 0.5 $\mu$m or more.

Number of Ti-Nb complex precipitates with a grain size of 3 nm or more and 50 nm or less: 500 /$\mu$m$^3$ or more and 6000 /$\mu$m$^3$ or less

When the number of Ti-Nb complex precipitates with a grain size of 3 nm or more and 50 nm or less is less than 500 /$\mu$m$^3$, the hot-pressed member sometimes cannot have high delayed fracture resistance. Thus, the number of Ti-Nb complex precipitates with a grain size of 3 nm or more and 50 nm or less is 500 /$\mu$m$^3$ or more, preferably 600 /$\mu$m$^3$ or more, more preferably 700 /$\mu$m$^3$ or more, still more preferably 1000 /$\mu$m$^3$ or more. The number of Ti-Nb complex precipitates with a grain size of 3 nm or more and 50 nm or less is most preferably 1500 /$\mu$m$^3$ or more. On the other hand, when the number of Ti-Nb complex precipitates with a grain size of 3 nm or more and 50 nm or less is more than 6000 /$\mu$m$^3$, edge cracking may occur in the blanking of the steel sheet for hot pressing. Thus, the number of Ti-Nb complex precipitates with a grain size of 3 nm or more and 50 nm or less is 6000 /$\mu$m$^3$ or less, preferably 5500 /$\mu$m$^3$ or less, more preferably 5000 /$\mu$m$^3$ or less. The number of Ti-Nb complex precipitates with a grain size of 3 nm or more and 50 nm or less is still more preferably 4500 /$\mu$m$^3$ or less, most preferably 4000 /$\mu$m$^3$ or less.

With respect to the atomic concentration ratio of Ti to Nb of Ti-Nb complex precipitates, when Nb is 1, Ti is more than 1 and 12 or less, and one or two or more of Mo, V, Cr, Mn, W, Ca, Mg, and Sn may be contained in an amount not exceeding the atomic concentration of Ti. The precipitates are composed mainly of a carbide, nitride, and/or oxide.

Next, the reasons for limiting the dislocation density of the steel sheet for hot pressing are described. The steel sheet for hot pressing has a dislocation density of $1.0 \times 10^{15}$ /m$^2$ or more.

Dislocation density: $1.0 \times 10^{15}$ /m$^2$ or more

At a dislocation density of less than $1.0 \times 10^{15}$ /m$^2$, the hot-pressed member sometimes cannot have a prior-austenite average grain size of 7.0 $\mu$m or less and cannot have high low-temperature toughness. Thus, the dislocation density is $1.0 \times 10^{15}$ /m$^2$ or more. The dislocation density is preferably $1.4 \times 10^{15}$ /m$^2$ or more, more preferably $1.8 \times 10^{15}$ /m$^2$ or more, still more preferably $2.0 \times 10^{15}$ /m$^2$ or more. The dislocation density is most preferably $2.2 \times 10^{15}$ /m$^2$ or more.

Although the dislocation density may have any upper limit, a dislocation density of more than $2.0 \times 10^{16}$ /m$^2$ results in an increased wear of a die assembly in the blanking. Thus, the dislocation density is preferably $2.0 \times 10^{16}$ /m$^2$ or less, more preferably $1.5 \times 10^{16}$ /m$^2$ or less, still more preferably $1.0 \times 10^{16}$ /m$^2$ or less, most preferably $0.5 \times 10^{16}$ /m$^2$ or less.

Next, a method for producing a steel sheet for hot pressing according to the present invention is described. In the description, the temperature expressed by "°C" is the temperature at a surface of a steel sheet or a surface of a steel material.

A method for producing a steel sheet for hot pressing, including:

heating a steel material to 1150°C or more;
then, after rough rolling,
performing hot rolling including finish rolling such that a total rolling reduction ratio below an RC temperature defined by the formula (1) in the finish rolling is 20% or more and 80% or less and a finish rolling end temperature is (RC - 200°C) or more and (RC - 20°C) or less;
then starting cooling within 2.0 seconds after completion of the finish rolling;
performing cooling at an average cooling rate of 30°C/s or more to a cooling stop temperature of 550°C or more and 700°C or less;
performing coiling at the cooling stop temperature;
then cooling the steel sheet from the cooling stop temperature to 500°C at an average cooling rate of 50°C/h or less; and
then, after pickling the steel sheet, cold-rolling the steel sheet at a rolling reduction ratio of 20% or more and 80% or less, RC (°C = 850 + 100 × C + 100 × N + 10 × Mn + 700 × Ti + 5800 × B + 10 × Cr + 50 × Mo + 2000 × Nb + 150 × V)          formula (1)

wherein each element symbol in the formula (1) is a corresponding element content (% by mass) of steel, and for an element not contained in the steel, the element symbol in the formula is 0. The details are described below.

In the present invention, a method for producing the steel material may be, but is not limited to, any commonly used method for obtaining molten steel with the composition described above by steelmaking by a known method, such as using a converter, and producing the steel material, such as a slab, by a casting method, such as continuous casting. A known casting method, such as an ingot casting and blooming method, may also be used. Scrap may also be used as a raw material.

Heating temperature of the steel material (hot direct rolling of a slab after casting, or a warm slab or a cold slab): 1150°C or more

Most of carbonitride-forming elements, such as Ti and Nb, are present as coarse carbonitrides in the steel material, such as a slab, cooled to a low temperature. If the coarse precipitates are not once dissolved by heating, fine Ti-Nb complex precipitates cannot be formed, and a hot-pressed member with high delayed fracture resistance cannot be produced. Thus, the steel material before hot rolling is directly hot-rolled at a high temperature after casting (hot direct rolling), or the steel material before hot rolling is heated to dissolve coarse precipitates. When a slab is heated, the heating temperature of the steel material should be 1150°C or more to sufficiently dissolve coarse precipitates before hot rolling. The heating temperature is preferably 1180°C or more, more preferably 1200°C or more. On the other hand, an excessively high heating temperature of the steel material results in the occurrence of a slab defect and a decrease in yield due to scaling off. Thus, the heating temperature of the steel material is preferably 1350°C or less. The heating temperature of the steel material is more preferably 1300°C or less, still more preferably 1280°C or less. The steel material is heated to a heating temperature of 1150°C or more and is held for a predetermined time. If the holding time is more than 9000 seconds, however, the amount of scale formed increases. This often causes scale biting or the like in the subsequent hot-rolling step and makes it difficult to remove scale by pickling. Thus, the holding time of the steel material in the temperature range of 1150°C or more is preferably 9000 seconds or less. More preferably, the holding time of the steel material in the temperature range of 1150°C or more is 7200 seconds or less. Coarse precipitates should be sufficiently dissolved, and the holding time of the steel material in the temperature range of 1150°C or more is therefore preferably 1800 seconds or more. The holding time of the steel material in the temperature range of 1150°C or more is more preferably 3600 seconds or more.

In the present invention, the heating of the steel material is followed by hot rolling composed of rough rolling and finish rolling. The rough rolling may be performed under any conditions where a desired sheet bar size can be achieved. After the rough rolling and before the finish rolling, descaling with high-pressure water is performed at an entry side of a finish rolling mill.

Total rolling reduction ratio below RC temperature in finish rolling: 20% or more and 80% or less

Reduction below the RC temperature accumulates strain without recrystallization of austenite grains and introduces a deformation band. Strain or a deformation band in austenite grains increases the number of transformation nuclei, decreases the grain size of ferrite after transformation, increases the aspect ratio of the ferrite, contributes to a decrease in the prior-austenite grain size of the hot-pressed member, and provides the hot-pressed member with high low-temperature toughness. To produce these effects, the total rolling reduction ratio below the RC temperature is 20% or more, preferably 25% or more, more preferably 30% or more. The total rolling reduction ratio below the RC temperature is more preferably 35% or more. On the other hand, a total rolling reduction ratio below the RC temperature of more than 80% may result in the aspect ratio of the ferrite in the steel sheet for hot pressing exceeding 12.0 and may cause edge cracking in the blanking of the steel sheet for hot pressing. Furthermore, punching of the hot-pressed member may cause edge cracking. Thus, the total rolling reduction ratio of finish rolling below the RC temperature is 80% or less, preferably 70% or less, more preferably less than 60%. To achieve a target total rolling reduction ratio, forced cooling is performed as required during rolling. The cooling method is, for example, forced air cooling, mist cooling, water cooling, or the like.

Finish rolling end temperature: (RC - 200°C) or more and (RC - 20°C) or less

A finish rolling end temperature below (RC - 200°C) may result in rolling at the two-phase temperature of ferrite + austenite. Ferrite transformation at a high temperature during rolling may increase the size of ferrite grains, and the hot-pressed member with high low-temperature toughness may not be produced. Thus, the finish rolling end temperature is (RC - 200°C) or more. The finish rolling end temperature is preferably (RC - 180°C) or more, more preferably (RC - 150°C) or more. On the other hand, at a finish rolling end temperature higher than (RC - 20°C), a total rolling reduction ratio of 20% or more at the RC temperature or lower is difficult to achieve. Thus, the finish rolling end temperature is (RC - 20°C) or less. The finish rolling end temperature is preferably (RC - 40°C) or less, more preferably (RC - 60°C) or less. The finish rolling end temperature is the surface temperature of the steel sheet.

Cooling start time: within 2.0 seconds after completion of finish rolling

Forced cooling is started within 2.0 seconds after completion of the finish rolling and is stopped at the cooling stop temperature (coiling temperature), which is followed by coiling. When the time from the end of finish rolling to the start of forced cooling is more than 2.0 seconds, strain introduced into austenite grains is recovered, and fine ferrite may not be formed. Thus, the forced cooling start time is within 2.0 seconds after completion of the finish rolling. The forced cooling start time is preferably within 1.5 seconds after completion of the finish rolling. The forced cooling start time is more preferably within 1.0 seconds after completion of the finish rolling. The lower limit is preferably, but not limited to, 0 seconds or more to inhibit the recovery of strain introduced into austenite grains.

Average cooling rate from finish rolling end temperature to cooling stop temperature (coiling temperature): 30°C/s or more

In the forced cooling, when the average cooling rate from the finish rolling end temperature to the coiling temperature is less than 30°C/s, ferrite transformation occurs at a high temperature, and fine ferrite may not be formed. Thus, the average cooling rate is 30°C/s or more. The average cooling rate is preferably 40°C/s or more, more preferably 50°C/s or more. Although the average cooling rate may have any upper limit, an excessively high average cooling rate may make it difficult to control the cooling stop temperature and to achieve a desired microstructure. Thus, the average cooling rate is preferably 300°C/s or less. The average cooling rate is specified on the basis of the average cooling rate at the surface of the steel sheet.

Cooling stop temperature (coiling temperature): 550°C or more and 700°C or less

At a cooling stop temperature (coiling temperature) of less than 550°C, the Ti-Nb complex precipitates cannot have a desired density. Thus, the cooling stop temperature is 550°C or more. The cooling stop temperature is preferably 570°C or more, more preferably 600°C or more. At a cooling stop temperature of more than 700°C, the ferrite sometimes becomes coarse and does not have a desired average minor axis length. Thus, the cooling stop temperature is 700°C or less. The cooling stop temperature is preferably 680°C or less, more preferably 660°C or less.

Average cooling rate from cooling stop temperature (coiling temperature) to 500°C after coiling: 50°C/h or less

When the average cooling rate from the cooling stop temperature (coiling temperature) to 500°C after the coiling is more than 50°C/h, the number of Ti-Nb complex precipitates with a grain size of 3 nm or more and 50 nm or less may be more than 6000 /$\mu$m$^3$, and edge cracking may occur in the blanking of the steel sheet for hot pressing. Thus, the average cooling rate from the cooling stop temperature (coiling temperature) to 500°C after the coiling is 50°C/h or less. After the coiling, the average cooling rate from the cooling stop temperature (coiling temperature) to 500°C is preferably 40°C/h or less, more preferably 30°C/h or less, still more preferably 20°C/h or less. After the coiling, the average cooling rate from the cooling stop temperature (coiling temperature) to 500°C is preferably 1°C/h or more, more preferably 5°C/h, from the perspective of productivity.

A method for cooling from the cooling stop temperature (coiling temperature) to 500°C is not particularly limited, and cooling may be performed in the usual manner. The cooling method is, for example, heat-insulating cover cooling, natural air cooling, forced air cooling, gas cooling, mist cooling, water cooling, or the like. The coiling and cooling may be followed by temper rolling in the usual manner.

Pickling after coiling

After the coiling, pickling is performed to remove scale formed on the surface. The pickling treatment is not particularly limited and may be performed in the usual manner.

Cold rolling at rolling reduction ratio of 20% or more and 80% or less

When the rolling reduction ratio in cold rolling is less than 20%, the steel sheet for hot pressing cannot have at least one of a desired aspect ratio of ferrite, a desired average minor axis length of ferrite, and a desired dislocation density, the hot-pressed member may not have a desired prior-austenite average grain size of 7.0 $\mu$m or less, and the hot-pressed member cannot have high low-temperature toughness. Thus, the rolling reduction ratio is 20% or more. The rolling reduction ratio is preferably 30% or more, more preferably 40% or more. On the other hand, when the rolling reduction ratio in cold rolling is more than 80%, the steel sheet for hot pressing cannot have a desired aspect ratio of ferrite, and edge cracking may occur in the blanking of the steel sheet for hot pressing and in the punching of the hot-pressed member. Thus, the rolling reduction ratio is 80% or less. The rolling reduction ratio is preferably 70% or less, more preferably 60% or less. The cold rolling may be followed by temper rolling in the usual manner.

Next, a production method for applying Zn-coating treatment to a surface of a steel sheet for hot pressing according to the present invention is described.

A steel sheet for hot pressing according to the present invention may be a cold-rolled steel sheet produced by the production process described above and may also be subjected to a coating step of forming a Zn-coated layer depending on the purpose. The coating step may be a known electroplated coating method or a known deposition plating method. A hot-dip coating method can be applied only at a heating temperature of 600°C or less in the step, because the steel sheet for hot pressing sometimes cannot have a desired aspect ratio of ferrite or a desired dislocation density due to recrystallization of ferrite by heating. The coating step may be followed by alloying treatment at 600°C or less. The coating weight of the coated layer is not particularly limited and may be a typical weight. For example, the coating weight of the coated layer preferably ranges from 5 to 150 $g/m^2$ on one side. At a coating weight of less than 5 $g/m^2$, it may be difficult to ensure corrosion resistance. On the other hand, at a coating weight of more than 150 $g/m^2$, the coating peel-off resistance may decrease. The coated layer may contain one or two or more of Si, Mg, Ni, Fe, Co, Mn, Sn, Pb, Be, B, P, S, Ti, V, W, Mo, Sb, Cd, Nb, Cr, Sr, and the like, in addition to Zn. The coating may be followed by temper rolling in the usual manner.

When the steel sheet for hot pressing provided with a Zn-coated layer is heated and is then hot-pressed, part or all of the coated layer components contained in the Zn-coated layer diffuse into the base steel sheet and form a solid solution phase or an intermetallic compound, and at the same time and conversely a base steel sheet component Fe diffuses into the Zn-coated layer and forms a solid solution phase or an intermetallic compound. An oxide film layer containing Zn is formed on the surface of the Zn-coated layer.

For example, heating a hot-dip galvanized layer, a hot-dip galvannealed layer, an electrogalvanized layer, or the like forms an FeZn solid-solution phase in which Zn is dissolved in Fe, a ZnFe intermetallic compound, a ZnO layer on the surface, or the like. Furthermore, heating an electrical Zn-Ni alloy-coated layer forms a solid-solution phase containing Ni in which a coated layer component is dissolved in Fe, an intermetallic compound composed mainly of ZnNi, a ZnO layer on the surface, or the like.

In the present invention, electromagnetic stirring (EMS), intentional bulging soft reduction casting (IBSR), or the like may be used to reduce segregation of steel components during continuous casting. Electromagnetic stirring treatment can form equiaxed crystals at half the thickness of a slab and reduce segregation. Intentional bulging soft reduction casting can prevent the flow of molten steel in an unsolidified portion of a continuous cast slab and reduce segregation at half the thickness of a slab. Applying at least one of these segregation reduction treatments can improve the low-temperature toughness of a hot-pressed member described later.

Next, the microstructure of the hot-pressed member is described.

A hot-pressed member has a microstructure in which martensite, tempered martensite, and bainite constitute 90% or more and 100% or less by area in total, and the remaining microstructure constitutes 10% or less by area, the hot-pressed member has a prior-austenite average grain size of 7.0 $\mu$m or less, and the hot-pressed member contains 500 /$\mu$m$^3$ or more and 6000 /$\mu$m$^3$ or less of Ti-Nb complex precipitates with a grain size of 3 nm or more and 50 nm or less. The chemical composition of the hot-pressed member is the same as the chemical composition of the steel sheet for hot pressing.

Martensite, tempered martensite, and bainite constitute 90% or more and 100% or less by area in total

When martensite, tempered martensite, and bainite constitute less than 90% by area in total, high low-temperature toughness cannot be achieved. Thus, martensite, tempered martensite, and bainite constitute 90% or more by area in total. Martensite, tempered martensite, and bainite preferably constitute 95% or more, more preferably 100% by area in total.

The remaining microstructure of the hot-pressed member may be ferrite, pearlite, and retained austenite, which may constitute 10% or less by area in total. The lower limit may be, but is not limited to, 0%.

Prior-austenite average grain size: 7.0 $\mu$m or less

A smaller prior-austenite average grain size results in higher low-temperature toughness. A prior-austenite average grain size of more than 7.0 $\mu$m results in low low-temperature toughness. Thus, the prior-austenite average grain size is 7.0 $\mu$m or less. Due to greater advantages of the present invention, the prior-austenite average grain size is preferably 6.0 $\mu$m or less, more preferably 5.5 $\mu$m or less, still more preferably 5.0 $\mu$m or less. To ensure hardenability during hot pressing, the lower limit is preferably 1.0 $\mu$m or more.

500 /$\mu$m$^3$ or more and 6000 /$\mu$m$^3$ or less of Ti-Nb complex precipitates with a grain size of 3 nm or more and 50 nm or less

When the number of Ti-Nb complex precipitates with a grain size of 3 nm or more and 50 nm or less is less than 500 /$\mu$m$^3$, high delayed fracture resistance cannot be achieved. Thus, the number of Ti-Nb complex precipitates with a grain size of 3 nm or more and 50 nm or less is 500 /$\mu$m$^3$ or more. The number of Ti-Nb complex precipitates with a grain size of 3 nm or more and 50 nm or less is preferably 600 /$\mu$m$^3$ or more, more preferably 700 /$\mu$m$^3$ or more, still more preferably 1000 /$\mu$m$^3$ or more. On the other hand, when the number of Ti-Nb complex precipitates with a grain size of 3 nm or more and 50 nm or less is more than 6000 /$\mu$m$^3$, high low-temperature toughness cannot be achieved, and edge cracking of the hot-pressed member may occur. Thus, the number of Ti-Nb complex precipitates with a grain size of 3 nm or more and 50 nm or less is 6000 /$\mu$m$^3$ or less. The number of Ti-Nb complex precipitates with a grain size of 3 nm or more and 50 nm or less is preferably 5500 /$\mu$m$^3$ or less, more preferably 5000 /$\mu$m$^3$ or less.

Next, a method for producing a hot-pressed member according to the present invention is described.

The hot pressing step is the step of producing a hot-pressed member with a tensile strength of 1760 MPa or more by trimming a steel sheet for hot pressing by shearing, heating the steel sheet to a temperature of an $A_{c3}$ transformation point or higher and 1000°C or less at an average heating rate of 3°C/s or more and 200°C/s or less, holding the steel sheet in this temperature range for 0 seconds or more and 300 seconds or less, and then hot-pressing the steel sheet at an Ms temperature or higher.

Trimming by shearing

The steel sheet for hot pressing is trimmed by shearing to dimensions matching the shape of the hot-pressed member to be produced. The trimming method by shearing is not particularly limited and may be performed in the usual manner.

Average heating rate: 3°C/s or more and 200°C/s or less

When the average heating rate from room temperature to the heating temperature of the steel material is less than 3°C/s, the recrystallization and grain growth of ferrite proceed, the grain size of austenite at the time of reverse transformation into austenite becomes coarse, and the prior-austenite average grain size of less than 7.0 $\mu$m after hot pressing cannot be achieved. Thus, the average heating rate is 3°C/s or more, preferably 5°C/s or more, more preferably 50°C/s or more. At an average heating rate of more than 200°C/s, it is difficult to control the heating temperature. Thus, the average heating rate is preferably 200°C/s or less. The average heating rate is preferably 150°C/s or less, more preferably 110°C/s or less.

Heating temperature: $A_{c3}$ transformation point or higher and 1000°C or less

When the heating temperature is lower than the Ac$_3$ temperature, a two-phase region of ferrite and austenite is formed, and martensite, tempered martensite, and bainite after hot pressing cannot constitute 90% or more by area in total. Thus, the lower limit of the heating temperature is Ac$_3$ temperature or higher. The heating temperature is preferably Ac$_3$ temperature + 10°C or more, more preferably Ac$_3$ temperature + 20°C or more. On the other hand, at a heating temperature of more than 1000°C, the recrystallization and grain growth of austenite proceed, and the prior-austenite average grain size of less than 7.0 $\mu$m after hot pressing cannot be achieved. Thus, the upper limit of the heating temperature is 1000°C or less. The heating temperature is preferably 980°C or less, more preferably 950°C or less.

Holding time at Ac$_3$ temperature or higher and 1000°C or less: 0 seconds or more and 300 seconds or less

When the holding time at the Ac$_3$ temperature or higher and 1000°C or less is more than 300 seconds, the grain growth of austenite proceeds, and the prior-austenite average grain size of less than 7.0 $\mu$m after hot pressing cannot be achieved. Thus, the holding time at the Ac$_3$ temperature or higher and 1000°C or less is 300 seconds or less. The holding time at the Ac$_3$ temperature or higher and 1000°C or less is preferably 200 seconds or less, more preferably 100 seconds or less. The holding time at the Ac$_3$ temperature or higher and 1000°C or less is still more preferably 70 seconds or less. The lower limit of the holding time is, but not limited to, 0 seconds (no holding time).

Hot pressing temperature: Ms temperature or higher

Hot press forming at a temperature lower than the Ms temperature may lower formability due to martensite transformation of a portion of the steel sheet and cause cracking during forming. Thus, the hot press forming is performed at the Ms temperature or higher. The upper limit is preferably 1000°C or less because the recrystallization and grain growth of austenite proceed, and the prior-austenite average grain size of less than 7.0 $\mu$m after hot pressing cannot be achieved.

The heating may be performed by any method that can achieve a desired heating rate, such as furnace heating, high-frequency heating, or Joule heating, preferably by Joule heating due to greater advantages of the present invention.

The cooling after hot pressing may be performed by any method that can achieve a cooling rate of 30°C/s or more in cooling to Ms - 200°C. As long as a desired cooling rate can be achieved, the cooling can be performed by natural cooling, forced air cooling, water cooling, mist cooling, gas cooling, die assembly cooling, or the like, preferably by die assembly cooling due to greater advantages of the present invention.

The surface of the member after hot pressing may be painted in the usual manner. For example, any of spray painting, electrodeposition painting, and the like can be applied. If necessary, baking treatment may be performed in the usual manner after painting. For example, baking treatment at 100°C or more and 300°C or less for 1 minute or more and 60 minutes or less is preferred. The painting and the baking treatment can be repeated without problems. Chemical conversion treatment may be performed in the usual manner to form an underlayer. For example, any of zinc phosphate treatment, iron phosphate treatment, zirconium treatment, and the like can be applied.

The $Ac_3$ temperature can be determined using the following formula:

$Ac_3$ temperature (°C) = 881 - 206C + 53Si - 15Mn - 20Ni - 1Cr - 27Cu + 41Mo

The element symbol in the formula represents the element content (% by mass) and is 0 for an element not contained.

The Ms temperature can be determined using the following formula:

Ms temperature (°C) = 561 - 474C - 33Mn - 18Ni - 17Cr - 21Mo

The element symbol in the formula represents the element content (% by mass) and is 0 for an element not contained.

EXAMPLES

The present invention is more specifically described in the following examples. The present invention is not limited to these examples. Appropriate modifications may be made within the scope of the present invention, and all of them are within the technical scope of the present invention.

A molten steel with the composition shown in Table 1 was obtained by steelmaking in a converter, and a steel slab (steel material) was produced by a continuous casting method. The columns of RC temperature, $Ac_3$ temperature, and Ms temperature in Table 1 represent the RC temperature, $Ac_3$ temperature, and Ms temperature of each steel material. These steel materials were then heated under the production conditions shown in Tables 2-1 and 2-2, were subjected to rough rolling, and were subjected to finish rolling under the conditions shown in Tables 2-1 and 2-2. After completion of finish rolling, the steel sheet was cooled at the cooling start time (the time from the completion of finish rolling to the start of cooling (forced cooling)) and at the average cooling rate (the average cooling rate from the finish rolling end temperature to the cooling stop temperature (coiling temperature)) under the conditions shown in Tables 2-1 and 2-2, was coiled at the coiling temperature (cooling stop temperature) under the conditions shown in Tables 2-1 and 2-2, and was then cooled under the conditions shown in Tables 2-1 and 2-2. The hot-rolled steel sheet thus produced was subjected to skin pass rolling, was then pickled at a hydrochloric acid concentration of 10% by mass and at a temperature of 85°C, and was cold-rolled at the rolling reduction ratio shown in Tables 2-1 and 2-2 to a thickness shown in Tables 2-1 and 2-2. Some of them were subjected to hot-dip galvanizing treatment, alloying treatment, or electrogalvanizing treatment. In the column of coating in Tables 2-1 and 2-2, CR denotes a cold-rolled steel sheet after cold rolling, GI denotes a cold-rolled steel sheet subjected to hot-dip galvanizing, GA denotes a cold-rolled steel sheet further alloyed after hot-dip galvanizing, EG denotes an electrogalvanized cold-rolled steel sheet, and EGN denotes an electrogalvanized cold-rolled steel sheet alloyed with Ni.

A test specimen was taken from the steel sheet for hot pressing thus produced and was subjected to microstructure observation and a blanking test. The microstructure observation method and various test methods are described below. For coated steel sheets, steel sheets after coating were tested and evaluated.

(1) Microstructure Observation

A test specimen for a scanning electron microscope (SEM) was taken from the steel sheet for hot pressing and was polished to expose a cross section (a cross section parallel to the rolling direction) at a quarter thickness position. The exposed cross section was corroded with an etchant (3% by mass nital solution) and was observed and photographed in 10 visual fields with the scanning electron microscope (SEM) at 1000x magnification. The area fractions [%] of ferrite and pearlite were quantified by measuring the area fractions in microstructure photographs in the 10 visual fields by a point count method (in accordance with ASTM E562-83 (1988)). Table 3 shows the results. The average aspect ratio of ferrite was determined by approximating all ferrite grains to an ellipse in an image in which the area fraction was quantified, dividing the major axis length of the ellipse by the minor axis length, and averaging the results for all the ferrite grains. Tables 3-1 and 3-2 show the results. The average minor axis length of the ferrite was determined by averaging the minor axis lengths of the ferrite grains obtained by the measurement of the aspect ratio. Tables 3-1 and 3-2 show the results.

The density of Ti-Nb complex precipitates was determined by observing 10 or more visual fields with a transmission electron microscope at 200,000x magnification, selecting Ti-Nb complex precipitates of 3 nm or more and 50 nm or less in which Ti and Nb could be detected by elemental analysis using energy dispersive X-ray spectroscopy (EDX), counting the number of the Ti-Nb complex precipitates, and dividing the number by the total volume of the observation visual field (area x thickness of thin film). Tables 3-1 and 3-2 show the results. The thickness of the thin film used for the transmission electron microscope was measured by electron energy-loss spectroscopy (EELS). The size of precipitates herein is obtained by determining the area of each precipitate with an image analyzer and converting the area to an equivalent circular diameter. Samples taken from the steel sheet for hot pressing and the hot-pressed member were measured by these methods.

(2) Measurement of Dislocation Density

A test specimen for dislocation density measurement (20 mm x 20 mm) is taken from the steel sheet for hot pressing. A surface to be measured at a quarter thickness position is mechanically and chemically polished in a surface layer and is subjected to X-ray diffractometry. The $CoK\alpha1$ line is used as incident X-ray, and the half-widths of peaks of $\alpha\{110\}$, $\alpha\{211\}$, and $\alpha\{220\}$ are measured. The measured half-widths of the peaks of $\alpha\{110\}$, $\alpha\{211\}$, and $\alpha\{220\}$ are corrected to true half-widths using a strain-free standard test specimen (Si), and the strain ($\varepsilon$) is determined by a Williamson-Hall method. The dislocation density ($\rho$) is determined using the following formula using the strain ($\varepsilon$) and the Burgers vector (b = 0.25 nm).

$$\rho = 14.4 \times \varepsilon^2/b^2$$

Tables 3-1 and 3-2 show the results.

(3) Blanking Test

Ten blank sheets (50 mm x 50 mm) were taken from the steel sheet for hot pressing. A punched hole of 20 mm$\phi$ was formed with a punch of a 20-mm$\phi$ flat-bottomed type by determining the hole diameter on the die side such that the punching clearance was within 20% $\pm$ 2% and by fixing a blank sheet with a blank holder from above. After punching all the 10 blank sheets, the fracture surface state of the punched surface was observed with a microscope (magnification: 50 times) over the entire perimeter of the punched hole for the presence of a crack, a chip, a brittle fracture surface, a secondary shear surface, or the like. The cracking properties of the 10 punched holes in blanking were evaluated: 10 punched holes without cracks, chips, brittle fracture surfaces, secondary shear surfaces, or the like were rated as good (pass); 8 or 9 punched holes without cracks, chips, brittle fracture surfaces, secondary shear surfaces, or the like were rated as fair (pass); and the others (0 to 7 punched holes without cracks, chips, brittle fracture surfaces, secondary shear surfaces, or the like) were rated as poor (fail). Tables 3-1 and 3-2 show the results.
The steel sheet for hot pressing was subjected to the following hot pressing step to produce a hot-pressed member.
First, the entire perimeter of the steel sheet for hot pressing 270 mm x 330 mm in size was blanked from a 1000 mm x 1000 mm steel sheet using a shearing machine. The blanking was performed by controlling the shearing clearance within 20% $\pm$ 2%.
The hot pressing step was performed on the steel sheet for hot pressing under the conditions described in the hot pressing step shown in Tables 4-1 and 4-2 below. The die assembly used in the hot pressing had a punch width of 70 mm, a punch corner radius R of 4 mm, a die corner radius R of 4 mm, and a forming depth of 30 mm.
A test specimen was taken from the hat bottom portion of the hot-pressed member thus produced and was tested, evaluated, and the like as described below.

(4) Microstructure observation

The test specimen was polished to expose a cross section at a quarter thickness position (a cross section parallel to the rolling direction). The exposed cross section was corroded with an etchant (3% by mass nital solution) and was observed and photographed in 10 visual fields with the scanning electron microscope (SEM) at 5000x magnification. The area fractions [%] of martensite, tempered martensite, bainite, and ferrite were quantified by measuring the area fractions in microstructure photographs in the 10 visual fields by a point count method (in accordance with ASTM E562-83 (1988)). A lath-like microstructure was considered to be martensite, tempered martensite, and bainite, and a lamellar microstructure was considered to be pearlite. Ferrite can be distinguished from retained austenite due to the light-dark contrast of the remaining microstructure. The dark portion was considered to be ferrite, and the bright portion was considered to be retained austenite. Tables 5-1 and 5-2 show the results.

(5) Measurement of Prior-Austenite Average Grain Size

The prior-austenite grain size of the test specimen was measured in accordance with JIS G0551: 2013. More specifically, the test specimen was polished to expose a cross section at a quarter thickness position (a cross section parallel to the rolling direction). The exposed cross section was corroded with an etchant (an aqueous solution containing picric acid, a surfactant, and oxalic acid) to expose a prior-austenite microstructure, and the exposed cross section was photographed at a quarter thickness position in 10 visual fields with an optical microscope at 1000x magnification to measure the average equivalent circular diameter of prior-austenite grains. Tables 5-1 and 5-2 show the results.

(6) Tensile Test

A JIS No. 5 test specimen (gauge length GL: 50 mm) was taken from the hat bottom portion of the hot-pressed member thus produced, and the tensile strength (TS) was determined. More specifically, the test specimen was subjected to a tensile test in accordance with JIS Z 2241: 2011 to determine the tensile strength (TS) [MPa]. Each hot-pressed member was subjected to the tensile test twice, and the average value thereof was taken as the TS of the hot-pressed member. A TS of 1760 MPa or more was judged to be acceptable. Tables 5-1 and 5-2 show the results.

(7) Evaluation of Delayed Fracture Resistance

A four-point bending test specimen was taken from the hat bottom portion of the hot-pressed member and was subjected to a four-point bending test in accordance with ASTM G39-99 (2016). 5 g of ammonium thiocyanate ($NH_4SCN$), 38.96 g of citric acid ($C_6H_8O_7$), and 227.34 g of disodium hydrogen phosphate ($Na_2HPO_4$) were dissolved in 10 L of water to prepare a solution adjusted to a pH of 6.0. The test specimen subjected to the four-point bending test was immersed in the prepared solution at normal temperature to evaluate the delayed fracture resistance. A bending stress was applied in the solution to check for the presence of fracture. At a bending stress of 0.8 x TS, no fracture for 100 hours or more was judged to be high delayed fracture resistance (good), and fracture within 100 hours was judged to be low delayed fracture resistance (poor). The number of test specimens in the test was 2. No fracture of the two test specimens was judged to be good, and fracture of at least one test specimen was judged to be poor. Tables 5-1 and 5-2 show the results.

(8) Evaluation of Low-Temperature Toughness

A Charpy impact test specimen was taken from the hat bottom portion of the hot-pressed member and was subjected to a Charpy impact test. The number of test specimens in the test was 3. The shape of the test specimen was the same as the shape of the V-notch test specimen of JIS Z 2242. The Charpy impact test was performed at -50°C. A percent brittle fracture of less than 50% was judged to be acceptable (good), and a percent brittle fracture of 50% or more was judged to be unacceptable (poor). Each hot-pressed member was subjected to the Charpy test three times and was rated on the basis of the average value of three percent brittle fractures. Tables 5-1 and 5-2 show the results.

(9) Evaluation of Edge Cracking of Hot-Pressed Member

The fracture surface state of the punched surface was observed with a microscope (magnification: 50 times) over the entire perimeter of an end face of the hot-pressed member for the presence of a crack, a chip, a brittle fracture surface, or the like. The edge cracking of the hot-pressed member was evaluated by judging the hot-pressed member with no crack, chip, brittle fracture surface, or the like over the entire perimeter of the end face to be good (pass) and judging the hot-pressed member with a crack, chip, brittle fracture surface, or the like to be poor (fail). Tables 5-1 and 5-2 show the results.

[Table 1]

Table 1

| Steel | Chemical composition (% by mass) | | | | | | | | | | | | | | | | RC temperature (°C) | Ac₃ temperature (°C) | Ms temperature (°C) | Notes |
|---|---|---|---|---|---|---|---|---|---|---|---|---|---|---|---|---|---|---|---|---|
| | C | Si | Mn | P | S | Al | N | Nb | B | Ti | Cr | Cu | Ni | Sb | Sn | Others | | | | |
| A | 0.32 | 0.78 | 1.52 | 0.008 | 0.0010 | 0.038 | 0.0033 | 0.020 | 0.0031 | 0.035 | | 0.30 | 0.15 | | | | 978 | 823 | 356 | Inventive steel |
| B | 0.34 | 0.48 | 1.48 | 0.005 | 0.0009 | 0.039 | 0.0035 | 0.015 | 0.0028 | 0.045 | | | | | | Mg: 0.0020 | 975 | 814 | 351 | Inventive steel |
| C | 0.31 | 0.61 | 1.59 | 0.007 | 0.0013 | 0.036 | 0.0039 | 0.017 | 0.0032 | 0.051 | | | | | | Ta: 0.020, W: 0.015 | 983 | 826 | 362 | Inventive steel |
| D | 0.31 | 0.93 | 1.73 | 0.008 | 0.0008 | 0.040 | 0.0023 | 0.030 | 0.0024 | 0.044 | | | | | | Co: 0.012, Zr: 0.020 | 1001 | 840 | 357 | Inventive steel |
| E | 0.32 | 0.33 | 1.46 | 0.005 | 0.0006 | 0.031 | 0.0037 | 0.020 | 0.0022 | 0.041 | 0.17 | | | 0.0138 | | | 978 | 811 | 358 | Inventive steel |
| F | 0.33 | 0.31 | 1.55 | 0.009 | 0.0007 | 0.028 | 0.0039 | 0.022 | 0.0031 | 0.058 | | | | | | Ca: 0.0013, REM: 0.0024 | 999 | 806 | 353 | Inventive steel |
| G | 0.35 | 0.22 | 1.38 | 0.004 | 0.0009 | 0.045 | 0.0035 | 0.018 | 0.0030 | 0.061 | | | | 0.0250 | | Mo: 0.13 | 1002 | 805 | 342 | Inventive steel |
| H | 0.33 | 0.31 | 1.37 | 0.011 | 0.0008 | 0.036 | 0.0031 | 0.017 | 0.0150 | 0.031 | | | | | | | 1028 | 809 | 359 | Inventive steel |
| I | 0.32 | 0.29 | 1.45 | 0.009 | 0.0008 | 0.042 | 0.0053 | 0.022 | 0.0029 | 0.055 | | | | | | | 994 | 809 | 361 | Inventive steel |
| J | 0.32 | 0.12 | 1.09 | 0.010 | 0.0008 | 0.041 | 0.0032 | 0.025 | 0.0023 | 0.050 | | | | | | V: 0.15, Zn: 0.052 | 1012 | 805 | 373 | Inventive steel |
| K | 0.32 | 0.24 | 1.62 | 0.006 | 0.0006 | 0.037 | 0.0043 | 0.035 | 0.0023 | 0.056 | 0.17 | | | 0.0085 | 0.011 | | 1021 | 803 | 353 | Inventive steel |
| L | 0.27 | 0.53 | 2.47 | 0.009 | 0.0012 | 0.042 | 0.0045 | 0.082 | 0.0021 | 0.053 | | | | 0.0053 | | Bi: 0.009 | 1114 | 816 | 352 | Inventive steel |
| M | 0.39 | 0.24 | 1.62 | 0.007 | 0.0008 | 0.052 | 0.0039 | 0.025 | 0.0024 | 0.056 | 0.25 | | | | | | 1009 | 789 | 318 | Inventive steel |
| N | 0.44 | 0.31 | 1.39 | 0.008 | 0.0008 | 0.033 | 0.0043 | 0.018 | 0.0030 | 0.057 | | | | | | | 999 | 786 | 307 | Inventive steel |
| O | 0.33 | 0.28 | 1.58 | 0.006 | 0.0015 | 0.052 | 0.0040 | 0.015 | 0.0021 | 0.030 | | | | | | | 961 | 804 | 352 | Inventive steel |
| P | 0.38 | 0.17 | 1.42 | 0.005 | 0.0008 | 0.048 | 0.0031 | 0.024 | 0.0017 | 0.058 | | | | | | | 1000 | 790 | 334 | Inventive steel |
| Q | 0.43 | 0.15 | 1.35 | 0.004 | 0.0008 | 0.034 | 0.0034 | 0.018 | 0.0027 | 0.054 | 0.28 | | | | | | 997 | 780 | 308 | Inventive steel |
| R | 0.28 | 0.19 | 1.91 | 0.009 | 0.0008 | 0.044 | 0.0047 | 0.022 | 0.0025 | 0.057 | 0.18 | | | | | | 996 | 805 | 362 | Inventive steel |
| S | 0.37 | 0.32 | 1.66 | 0.005 | 0.0007 | 0.039 | 0.0021 | 0.032 | 0.0033 | 0.056 | | | | | | | 1024 | 797 | 331 | Inventive steel |
| T | 0.45 | 0.12 | 1.41 | 0.004 | 0.0009 | 0.038 | 0.0034 | 0.015 | 0.0015 | 0.050 | | | | | | | 982 | 774 | 301 | Inventive steel |
| U | 0.29 | 0.05 | 2.86 | 0.009 | 0.0006 | 0.047 | 0.0010 | 0.022 | 0.0008 | 0.055 | | | | | | | 994 | 781 | 329 | Inventive steel |
| V | 0.26 | 0.58 | 1.86 | 0.005 | 0.0006 | 0.040 | 0.0038 | 0.012 | 0.0025 | 0.150 | | | | | | | 1036 | 830 | 376 | Inventive steel |
| a | <u>0.24</u> | 0.39 | 1.52 | 0.008 | 0.0015 | 0.046 | 0.0042 | 0.021 | 0.0014 | 0.047 | | | | | | | 972 | 829 | 397 | Comparative steel |
| b | 0.29 | <u>1.42</u> | 1.47 | 0.013 | 0.0018 | 0.040 | 0.0036 | 0.011 | 0.0016 | 0.052 | | | | | | | 960 | 874 | 375 | Comparative steel |
| c | 0.30 | 0.34 | <u>3.81</u> | 0.005 | 0.0006 | 0.042 | 0.0030 | 0.015 | 0.0031 | 0.072 | | | | | | | 1014 | 780 | 293 | Comparative steel |
| d | 0.32 | 0.33 | 1.49 | 0.020 | <u>0.0110</u> | 0.037 | <u>0.0109</u> | 0.026 | 0.0056 | 0.056 | | | | | | | 1017 | 810 | 360 | Comparative steel |
| e | 0.40 | 0.21 | 1.54 | 0.009 | 0.0007 | 0.033 | 0.0046 | 0.020 | 0.0026 | <u>0.002</u> | | | | | | | 960 | 787 | 321 | Comparative steel |
| f | 0.39 | 0.25 | 1.43 | 0.008 | 0.0011 | 0.034 | 0.0040 | <u>0.001</u> | 0.0020 | 0.030 | | | | | | | 937 | 792 | 329 | Comparative steel |

Underline: indicates outside the scope of the present invention.  Elements without values: No intentional addition.

18

[Table 2-1]

| No | Steel | Slab heating temperature (°C) | Finish rolling | | Cooling | | | Average cooling rate up to (500°C) after coiling (°C/h) (*3) | Cold-rolling reduction ratio (%) | Coating | Thickness (mm) |
|---|---|---|---|---|---|---|---|---|---|---|---|
| | | | Total rolling reduction ratio below RC temperature (%) | Finish rolling end temperature (°C) | Cooling start time (s) (*1) | Average cooling rate (°C/s) (*2) | Cooling stop temperature (coiling temperature) (°C) | | | | |
| 1 | A | 1200 | 25 | 920 | 1.0 | 60 | 620 | 30 | 30 | CR | 1.4 |
| 2 | B | 1250 | 40 | 890 | 1.0 | 60 | 620 | 30 | 50 | CR | 1.4 |
| 3 | C | 1250 | 60 | 850 | 0.5 | 60 | 650 | 35 | 20 | CR | 2.0 |
| 4 | D | 1250 | 40 | 920 | 1.0 | 60 | 620 | 30 | 40 | CR | 1.4 |
| 5 | E | 1250 | 40 | 900 | 0.5 | 60 | 630 | 30 | 40 | CR | 1.4 |
| 6 | E | 1250 | 40 | 900 | 0.5 | 60 | 630 | 30 | 40 | EG | 1.4 |
| 7 | E | 1250 | 40 | 900 | 0.5 | 60 | 630 | 30 | 40 | EGN | 1.4 |
| 8 | E | 1250 | 40 | 900 | 0.5 | 60 | 630 | 30 | 40 | GI | 1.4 |
| 9 | E | 1250 | 40 | 900 | 0.5 | 60 | 630 | 30 | 40 | GA | 1.4 |
| 10 | F | 1250 | 40 | 900 | 1.0 | 60 | 620 | 30 | 50 | CR | 2.0 |
| 11 | G | 1250 | 30 | 930 | 1.0 | 60 | 640 | 30 | 50 | CR | 1.4 |
| 12 | H | 1250 | 30 | 950 | 2.0 | 60 | 620 | 30 | 65 | CR | 1.4 |
| 13 | I | 1250 | 40 | 920 | 1.0 | 60 | 620 | 35 | 50 | CR | 1.4 |
| 14 | I | 1250 | 40 | 920 | 1.0 | 60 | 620 | 35 | 50 | EGN | 1.4 |
| 15 | I | 1250 | 40 | 920 | 1.0 | 60 | 620 | 35 | 50 | CR | 1.4 |
| 16 | I | <u>1100</u> | 40 | 920 | 1.0 | 60 | 620 | 30 | 50 | CR | 1.4 |
| 17 | I | 1250 | <u>10</u> | 960 | 1.0 | 60 | 620 | 30 | 25 | CR | 1.4 |
| 18 | I | 1250 | <u>82</u> | 820 | 1.0 | 60 | 620 | 30 | 50 | CR | 1.4 |
| 19 | I | 1250 | 75 | <u>750</u> | 1.0 | 60 | 620 | 30 | 30 | CR | 1.4 |

(continued)

Table 2-1

| No | Steel | Finish rolling | | | Cooling | | | | Cold-rolling reduction ratio (%) | Coating | Thickness (mm) |
|---|---|---|---|---|---|---|---|---|---|---|---|
| | | Slab heating temperature (°C) | Total rolling reduction ratio below RC temperature (%) | Finish rolling end temperature (°C) | Cooling start time (s) (*1) | Average cooling rate (°C/s) (*2) | Cooling stop temperature (coiling temperature) (°C) | Average cooling rate up to (500°C) after coiling (°C/h) (*3) | | | |
| 20 | I | 1250 | 40 | 920 | <u>5.0</u> | 60 | 620 | 30 | 50 | CR | 1.4 |
| 21 | I | 1250 | 40 | 920 | 1.0 | <u>5</u> | 620 | 30 | 35 | CR | 1.4 |
| 22 | I | 1250 | 40 | 920 | 1.0 | 60 | <u>490</u> | - | 50 | CR | 1.4 |

*1: Time from completion of finish rolling to start of forced cooling, *2: Average cooling rate from finishing temperature to coiling temperature
*3: Average cooling rate up to 500°C after coiling
Underline: indicates outside the scope of the present invention. CR: cold-rolled steel sheet, EG: Cold-rolled steel sheet subjected to electrogalvanizing
EGN: Cold-rolled steel sheet subjected to electrogalvanizing and alloyed with Ni, GI: Hot-dip galvanized cold-rolled steel sheet, GA: Hot-dip Zn alloy coated cold-rolled steel sheet

[Table 2-2]

Table 2-2

| No | Steel | Slab heating temperature (°C) | Finish rolling | | Cooling | | | | Cold-rolling reduction ratio (%) | Coating | Thickness (mm) |
|---|---|---|---|---|---|---|---|---|---|---|---|
| | | | Total rolling reduction ratio below RC temperature (%) | Finish rolling end temperature (°C) | Cooling start time (s) (*1) | Average cooling rate (°C/s) (*2) | Cooling stop temperature (coiling temperature) (°C) | Average cooling rate up to (500°C) after coiling (°C/h) (*3) | | | |
| 23 | I | 1250 | 40 | 920 | 1.0 | 60 | 750 | 30 | 30 | CR | 1.4 |
| 24 | I | 1250 | 40 | 920 | 1.0 | 60 | 620 | 100 | 50 | CR | 1.4 |
| 25 | I | 1250 | 40 | 920 | 1.0 | 60 | 620 | 30 | 10 | CR | 1.4 |
| 26 | I | 1250 | 40 | 920 | 1.0 | 60 | 620 | 30 | 85 | CR | 1.4 |
| 27 | J | 1250 | 40 | 950 | 1.0 | 60 | 630 | 30 | 50 | CR | 1.4 |
| 28 | K | 1250 | 50 | 930 | 1.0 | 60 | 630 | 30 | 50 | CR | 1.4 |
| 29 | L | 1280 | 60 | 1000 | 1.5 | 60 | 570 | 5 | 50 | EGN | 1.4 |
| 30 | M | 1250 | 50 | 920 | 1.0 | 60 | 600 | 25 | 40 | CR | 1.2 |
| 31 | N | 1250 | 50 | 900 | 1.0 | 60 | 630 | 30 | 40 | CR | 1.6 |
| 32 | O | 1180 | 60 | 860 | 1.0 | 60 | 620 | 30 | 40 | CR | 1.4 |
| 33 | O | 1180 | 60 | 860 | 1.0 | 60 | 620 | 30 | 40 | EG | 1.4 |
| 34 | O | 1180 | 60 | 860 | 1.0 | 60 | 620 | 30 | 40 | EGN | 1.4 |
| 35 | O | 1180 | 60 | 860 | 1.0 | 60 | 620 | 30 | 40 | GI | 1.4 |
| 36 | O | 1180 | 60 | 860 | 1.0 | 60 | 620 | 30 | 40 | GA | 1.4 |
| 37 | P | 1250 | 60 | 900 | 1.0 | 60 | 610 | 25 | 45 | CR | 1.4 |
| 38 | Q | 1250 | 50 | 900 | 1.0 | 60 | 680 | 35 | 50 | CR | 1.4 |
| 39 | R | 1250 | 50 | 900 | 1.0 | 60 | 610 | 30 | 55 | CR | 1.4 |
| 40 | S | 1250 | 60 | 910 | 1.0 | 60 | 580 | 20 | 40 | CR | 1.4 |
| 41 | T | 1250 | 50 | 900 | 1.0 | 60 | 620 | 30 | 50 | CR | 1.0 |

| | | | Finish rolling | | Cooling | | | Average cooling rate up to (500°C) after coiling (°C/h) (*3) | Cold-rolling reduction ratio (%) | Coating | Thickness (mm) |
|---|---|---|---|---|---|---|---|---|---|---|---|
| No | Steel | Slab heating temperature (°C) | Total rolling reduction ratio below RC temperature (%) | Finish rolling end temperature (°C) | Cooling start time (s) (*1) | Average cooling rate (°C/s) (*2) | Cooling stop temperature (coiling temperature) (°C) | | | | |
| 42 | U | 1250 | 70 | 900 | 1.0 | 60 | 620 | 30 | 50 | CR | 1.4 |
| 43 | V | 1300 | 50 | 970 | 1.0 | 60 | 620 | 30 | 50 | EGN | 1.8 |
| 44 | a | 1250 | 30 | 920 | 1.0 | 60 | 620 | 30 | 50 | CR | 1.4 |
| 45 | b | 1250 | 30 | 920 | 1.0 | 60 | 620 | 30 | 50 | CR | 1.4 |
| 46 | c | 1250 | 35 | 920 | 1.0 | 60 | 620 | 30 | could not be cold-rolled | CR | 2.8 |
| 47 | d | 1250 | 50 | 920 | 1.0 | 60 | 620 | 30 | 50 | CR | 1.4 |
| 48 | e | 1250 | 30 | 920 | 1.0 | 60 | 620 | 30 | 50 | CR | 1.4 |
| 49 | f | 1250 | 30 | 900 | 1.0 | 60 | 620 | 30 | 50 | CR | 1.4 |

*1: Time from completion of finish rolling to start of forced cooling, *2: Average cooling rate from finishing temperature to coiling temperature *3: Average cooling rate up to 500°C after coiling Underline: indicates outside the scope of the present invention. CR: cold-rolled steel sheet, EG: electrogalvanized cold-rolled steel sheet EGN: electrogalvanized cold-rolled steel sheet alloyed with Ni, GI: hot-dip galvanized cold-rolled steel sheet, GA: hot-dip Zn alloy coated cold-rolled steel sheet

Table 2-2

[Table 3-1]

| No | Steel | Microstructure of steel sheet for hot pressing | | | | | | Dislocation density of steel sheet for hot pressing (x $10^{15}$/m$^2$) | Blanking properties | Notes |
|---|---|---|---|---|---|---|---|---|---|---|
| | | Ferrite area fraction (%) | Pearlite area fraction (%) | Remaining microstructure area fraction (%) | Ferrite average aspect ratio | Ferrite average minor axis length ($\mu$m) | Density of Ti-Nb complex precipitate with grain size of 3 nm to 50 nm (/ $\mu$m$^3$) | | | |
| 1 | A | 52 | 48 | 0 | 2.9 | 4.8 | 1440 | 1.7 | good | Example |
| 2 | B | 54 | 46 | 0 | 6.7 | 2.7 | 2000 | 2.2 | good | Example |
| 3 | C | 57 | 43 | 0 | 4.1 | 3.2 | 1660 | 1.8 | good | Example |
| 4 | D | 49 | 51 | 0 | 5.9 | 2.8 | 2190 | 2.0 | good | Example |
| 5 | E | 57 | 43 | 0 | 6.1 | 3.1 | 1540 | 2.0 | good | Example |
| 6 | E | 57 | 43 | 0 | 6.1 | 3.1 | 1540 | 2.0 | good | Example |
| 7 | E | 57 | 43 | 0 | 6.1 | 3.1 | 1540 | 2.0 | good | Example |
| 8 | E | 57 | 43 | 0 | 6.0 | 3.2 | 1420 | 1.9 | good | Example |
| 9 | E | 57 | 43 | 0 | 5.9 | 3.3 | 1280 | 1.8 | good | Example |
| 10 | F | 53 | 47 | 0 | 7.3 | 2.7 | 2710 | 2.2 | good | Example |
| 11 | G | 48 | 52 | 0 | 6.5 | 3.2 | 2410 | 2.2 | good | Example |
| 12 | H | 56 | 44 | 0 | 11.4 | 2.0 | 1240 | 2.4 | fair | Example |
| 13 | I | 55 | 45 | 0 | 7.7 | 2.4 | 2240 | 2.2 | good | Example |
| 14 | I | 55 | 45 | 0 | 7.7 | 2.4 | 2240 | 2.2 | good | Example |
| 15 | I | 55 | 45 | 0 | 7.7 | 2.4 | 2240 | 2.2 | good | Example |
| 16 | I | 54 | 46 | 0 | 6.9 | 2.2 | <u>200</u> | 2.2 | good | Comparative example |
| 17 | I | 57 | 43 | 0 | <u>1.9</u> | <u>6.6</u> | 2070 | 1.3 | good | Comparative example |
| 18 | I | 58 | 37 | 5 | <u>14.5</u> | 1.3 | 1620 | 2.4 | poor | Comparative example |
| 19 | I | 50 | 45 | 5 | 4.5 | <u>5.6</u> | 1330 | 2.1 | good | Comparative example |
| 20 | I | 50 | 50 | 0 | 5.8 | <u>5.3</u> | 1880 | 2.2 | good | Comparative example |
| 21 | I | 68 | 32 | 0 | 4.6 | <u>5.4</u> | 2020 | 1.9 | good | Comparative example |
| 22 | I | 54 | 41 | 5 | 8.3 | 2.2 | <u>300</u> | 2.2 | good | Comparative example |

Underline: indicates outside the scope of the present invention.

[Table 3-2]

| | | Microstructure of steel sheet for hot pressing | | | | | | Dislocation density of steel sheet for hot pressing (x $10^{15}$/m$^2$) | Blanking properties | Notes |
|---|---|---|---|---|---|---|---|---|---|---|
| No | Steel | Ferrite area fraction (%) | Pearlite area fraction (%) | Remaining microstructure area fraction (%) | Ferrite average aspect ratio | Ferrite average minor axis length ($\mu$m) | Density of Ti-Nb complex precipitate with grain size of 3 nm to 50 nm (/$\mu$m$^3$) | | | |
| 23 | I | 54 | 46 | 0 | 3.8 | 5.5 | 910 | 1.8 | good | Comparative example |
| 24 | I | 51 | 49 | 0 | 7.2 | 3.0 | 8220 | 2.2 | poor | Comparative example |
| 25 | I | 52 | 48 | 0 | 1.6 | 4.6 | 2240 | 0.8 | good | Comparative example |
| 26 | I | 56 | 44 | 0 | 19.0 | 1.1 | 2240 | 2.6 | poor | Comparative example |
| 27 | J | 56 | 44 | 0 | 8.0 | 2.2 | 2120 | 2.2 | good | Example |
| 28 | K | 56 | 44 | 0 | 8.9 | 2.1 | 2240 | 2.3 | good | Example |
| 29 | L | 47 | 53 | 0 | 9.2 | 1.5 | 4220 | 2.3 | fair | Example |
| 30 | M | 46 | 54 | 0 | 6.6 | 3.0 | 3260 | 2.1 | good | Example |
| 31 | N | 38 | 62 | 0 | 5.8 | 2.4 | 2300 | 2.1 | good | Example |
| 32 | O | 53 | 47 | 0 | 7.0 | 1.9 | 990 | 2.2 | good | Example |
| 33 | O | 53 | 47 | 0 | 7.0 | 1.9 | 990 | 2.2 | good | Example |
| 34 | O | 53 | 47 | 0 | 7.0 | 1.9 | 990 | 2.2 | good | Example |
| 35 | O | 53 | 47 | 0 | 6.8 | 2.0 | 880 | 2.1 | good | Example |
| 36 | O | 53 | 47 | 0 | 6.7 | 2.1 | 780 | 2.0 | good | Example |
| 37 | P | 43 | 57 | 0 | 8.5 | 1.8 | 3220 | 2.2 | good | Example |
| 38 | Q | 37 | 63 | 0 | 8.3 | 2.5 | 1400 | 2.3 | good | Example |
| 39 | R | 52 | 48 | 0 | 10.3 | 2.2 | 2780 | 2.3 | fair | Example |
| 40 | S | 47 | 53 | 0 | 6.3 | 1.8 | 4790 | 2.2 | good | Example |
| 41 | T | 38 | 62 | 0 | 8.8 | 2.4 | 2320 | 2.3 | good | Example |
| 42 | U | 49 | 48 | 3 | 10.2 | 1.5 | 3120 | 2.3 | fair | Example |
| 43 | V | 59 | 41 | 0 | 7.7 | 2.1 | 5720 | 2.3 | fair | Example |
| 44 | a | 64 | 36 | 0 | 7.1 | 2.8 | 1980 | 2.2 | good | Comparative example |
| 45 | b | 60 | 40 | 0 | 7.0 | 2.7 | 2400 | 2.2 | good | Comparative example |
| 46 | c | Unmeasured because cold rolling was impossible | | | | | | | | Comparative example |
| 47 | d | 50 | 50 | 0 | 8.8 | 1.8 | 1140 | 2.3 | good | Comparative example |

(continued)

| No | Steel | Ferrite area fraction (%) | Pearlite area fraction (%) | Remaining microstructure area fraction (%) | Ferrite average aspect ratio | Ferrite average minor axis length ($\mu$m) | Density of Ti-Nb complex precipitate with grain size of 3 nm to 50 nm (/ $\mu m^3$) | Dislocation density of steel sheet for hot pressing (x $10^{15}/m^2$) | Blanking properties | Notes |
|---|---|---|---|---|---|---|---|---|---|---|
| | | | | | Table 3-2 | | | | | | |
| | | Microstructure of steel sheet for hot pressing | | | | | | | | |
| 48 | e | 38 | 62 | 0 | 6.8 | 2.6 | <u>10</u> | 2.2 | good | Comparative example |
| 49 | f | 41 | 59 | 0 | 6.9 | 2.4 | <u>50</u> | 2.2 | good | Comparative example |

Underline: indicates outside the scope of the present invention.

[Table 4-1]

| No | Steel | Hot-pressing process | | | | |
|---|---|---|---|---|---|---|
| | | Average heating rate (°C/s) | Heating temperature (°C) | Holding time (s) | Hot-pressing temperature (°C) | Cooling rate up to Ms-200°C (°C/s) |
| | | | Table 4-1 | | | |
| 1 | A | 5 | 920 | 60 | 700 | 100 |
| 2 | B | 5 | 910 | 90 | 800 | 100 |
| 3 | C | 5 | 920 | 60 | 500 | 100 |
| 4 | D | 5 | 940 | 60 | 700 | 100 |
| 5 | E | 5 | 910 | 60 | 700 | 100 |
| 6 | E | 5 | 910 | 60 | 700 | 100 |
| 7 | E | 5 | 910 | 60 | 700 | 100 |
| 8 | E | 5 | 910 | 60 | 700 | 100 |
| 9 | E | 5 | 910 | 60 | 700 | 100 |
| 10 | F | 5 | 900 | 60 | 700 | 100 |
| 11 | G | 50 | 930 | 15 | 700 | 100 |
| 12 | H | 5 | 900 | 60 | 700 | 100 |
| 13 | I | 5 | 900 | 60 | 700 | 100 |
| 14 | I | 100 | 940 | 5 | 700 | 100 |
| 15 | I | 5 | 900 | 280 | 700 | 100 |
| 16 | I | 5 | 900 | 60 | 700 | 100 |
| 17 | I | 5 | 900 | 60 | 700 | 100 |
| 18 | I | 5 | 900 | 60 | 700 | 100 |
| 19 | I | 5 | 900 | 60 | 700 | 100 |
| 20 | I | 5 | 900 | 60 | 700 | 100 |

(continued)

| No | Steel | Hot-pressing process | | | | |
|----|-------|-----------------------------|------------------------------|---------------------|------------------------------------|------------------------------------|
| | | Average heating rate (°C/s) | Heating temperature (°C) | Holding time (s) | Hot-pressing temperature (°C) | Cooling rate up to Ms-200°C (°C/s) |
| 21 | I | 5 | 900 | 60 | 700 | 100 |
| 22 | I | 5 | 900 | 60 | 700 | 100 |
| Underline: indicates outside the scope of the present invention. | | | | | | |

Table 4-1

[Table 4-2]

Table 4-2

| No | Steel | Hot-pressing process | | | | |
|----|-------|-----------------------------|------------------------------|---------------------|------------------------------------|------------------------------------|
| | | Average heating rate (°C/s) | Heating temperature (°C) | Holding time (s) | Hot-pressing temperature (°C) | Cooling rate up to Ms-200°C (°C/s) |
| 23 | I | 5 | 900 | 60 | 700 | 100 |
| 24 | I | 5 | 900 | 60 | 700 | 100 |
| 25 | I | 5 | 900 | 60 | 700 | 100 |
| 26 | I | 5 | 900 | 60 | 700 | 100 |
| 27 | J | 5 | 900 | 60 | 700 | 100 |
| 28 | K | 5 | 900 | 120 | 700 | 100 |
| 29 | L | 3 | 910 | 60 | 700 | 100 |
| 30 | M | 5 | 880 | 60 | 700 | 100 |
| 31 | N | 5 | 880 | 150 | 700 | 100 |
| 32 | O | 200 | 980 | 0 | 700 | 100 |
| 33 | O | 100 | 950 | 5 | 600 | 100 |
| 34 | O | 100 | 950 | 5 | 600 | 100 |
| 35 | O | 100 | 950 | 5 | 600 | 100 |
| 36 | O | 100 | 950 | 5 | 600 | 100 |
| 37 | P | 5 | 890 | 60 | 700 | 100 |
| 38 | Q | 5 | 870 | 180 | 700 | 100 |
| 39 | R | 5 | 900 | 60 | 700 | 100 |
| 40 | S | 5 | 890 | 60 | 700 | 100 |
| 41 | T | 5 | 870 | 60 | 700 | 100 |
| 42 | U | 5 | 880 | 60 | 700 | 100 |
| 43 | V | 5 | 930 | 60 | 700 | 100 |
| 44 | a | 5 | 920 | 60 | 700 | 100 |
| 45 | b | 5 | 980 | 60 | 700 | 100 |
| 46 | c | 5 | 920 | 60 | 700 | 100 |
| 47 | d | 5 | 910 | 60 | 700 | 100 |
| 48 | e | 5 | 880 | 60 | 700 | 100 |

(continued)

| Table 4-2 | | | | | | |
|---|---|---|---|---|---|---|
| No | Steel | Hot-pressing process | | | | |
| | | Average heating rate (°C/s) | Heating temperature (°C) | Holding time (s) | Hot-pressing temperature (°C) | Cooling rate up to Ms-200°C (°C/s) |
| 49 | _f_ | 5 | 880 | 60 | 700 | 100 |
| Underline: indicates outside the scope of the present invention. | | | | | | |

[Table 5-1]

Table 5-1

| No | Steel | Microstructure of hot-pressed member | | | | Mechanical properties of hot-pressed member | | | | Notes |
|---|---|---|---|---|---|---|---|---|---|---|
| | | Area fractions of martensite, tempered martensite, and bainite (%) | Area fraction of remaining microstructure (%) | Prior austenite average grain size (μm) | Density of Ti-Nb complex precipitate with grain size of 3 nm to 50 nm (/μm³) | TS (MPa) | Delayed fracture resistance | Low-temperature toughness | Edge cracking of hot-pressed member | |
| 1 | A | 99 | 1 | 6.6 | 1100 | 1890 | good | good | good | Example |
| 2 | B | 98 | 2 | 5.1 | 1460 | 1950 | good | good | good | Example |
| 3 | C | 96 | 4 | 5.1 | 1270 | 1860 | good | good | good | Example |
| 4 | D | 94 | 6 | 4.5 | 1560 | 1910 | good | good | good | Example |
| 5 | E | 100 | 0 | 5.3 | 1230 | 1860 | good | good | good | Example |
| 6 | E | 100 | 0 | 5.3 | 1230 | 1860 | good | good | good | Example |
| 7 | E | 100 | 0 | 5.3 | 1230 | 1860 | good | good | good | Example |
| 8 | E | 100 | 0 | 5.5 | 1140 | 1860 | good | good | good | Example |
| 9 | E | 100 | 0 | 5.7 | 1020 | 1860 | good | good | good | Example |
| 10 | F | 100 | 0 | 5.2 | 2280 | 1920 | good | good | good | Example |
| 11 | G | 100 | 0 | 4.0 | 2690 | 2140 | good | good | good | Example |
| 12 | H | 100 | 0 | 4.6 | 1040 | 1870 | good | good | good | Example |
| 13 | I | 100 | 0 | 4.9 | 1880 | 1870 | good | good | good | Example |
| 14 | I | 100 | 0 | 3.8 | 1890 | 1870 | good | good | good | Example |
| 15 | I | 100 | 0 | 6.5 | 1370 | 1860 | good | good | good | Example |
| 16 | I | 100 | 0 | 4.8 | <u>160</u> | 1820 | poor | good | good | Comparative example |
| 17 | I | 100 | 0 | <u>8.2</u> | 1740 | 1860 | good | poor | good | Comparative example |
| 18 | I | 100 | 0 | 4.1 | 1360 | 1870 | good | good | poor | Comparative example |

(continued)

Table 5-1

| No | Steel | Microstructure of hot-pressed member | | | | Mechanical properties of hot-pressed member | | | | Notes |
|----|-------|---|---|---|---|---|---|---|---|-------|
| | | Area fractions of martensite, tempered martensite, and bainite (%) | Area fraction of remaining microstructure (%) | Prior austenite average grain size (μm) | Density of Ti-Nb complex precipitate with grain size of 3 nm to 50 nm (/μm³) | TS (MPa) | Delayed fracture resistance | Low-temperature toughness | Edge cracking of hot-pressed member | |
| 19 | — | 100 | 0 | 7.5 | 1120 | 1850 | good | poor | good | Comparative example |
| 20 | — | 100 | 0 | 7.3 | 1580 | 1860 | good | poor | good | Comparative example |
| 21 | — | 100 | 0 | 7.2 | 1700 | 1860 | good | poor | good | Comparative example |
| 22 | — | 100 | 0 | 4.8 | 250 | 1830 | poor | good | good | Comparative example |

Underline: indicates outside the scope of the present invention.

29

[Table 5-2]

<table>
<tr><td colspan="11">Table 5-2</td></tr>
<tr><td rowspan="3">No</td><td rowspan="3">Steel</td><td colspan="4">Microstructure of hot-pressed member</td><td colspan="3">Mechanical properties of hot-pressed member</td><td rowspan="3">Edge cracking of hot-pressed member</td><td rowspan="3">Notes</td></tr>
<tr><td rowspan="2">Area fractions of martensite, tempered martensite, and bainite (%)</td><td rowspan="2">Area fraction of remaining microstructure (%)</td><td rowspan="2">Prior austenite average grain size ($\mu$m)</td><td rowspan="2">Density of Ti-Nb complex precipitate with grain size of 3 nm to 50 nm (/$\mu$m$^3$)</td><td rowspan="2">TS (MPa)</td><td rowspan="2">Delayed fracture resistance</td><td rowspan="2">Low-temperature toughness</td></tr>
<tr></tr>
<tr><td>23</td><td>I</td><td>100</td><td>0</td><td><u>7.5</u></td><td>760</td><td>1840</td><td>good</td><td>poor</td><td>good</td><td>Comparative example</td></tr>
<tr><td>24</td><td>I</td><td>100</td><td>0</td><td>5.3</td><td><u>6930</u></td><td>1890</td><td>good</td><td>poor</td><td>poor</td><td>Comparative example</td></tr>
<tr><td>25</td><td>I</td><td>100</td><td>0</td><td><u>7.2</u></td><td>1880</td><td>1860</td><td>good</td><td>poor</td><td>good</td><td>Comparative example</td></tr>
<tr><td>26</td><td>I</td><td>100</td><td>0</td><td>3.9</td><td>1880</td><td>1870</td><td>good</td><td>good</td><td>poor</td><td>Comparative example</td></tr>
<tr><td>27</td><td>J</td><td>100</td><td>0</td><td>4.8</td><td>1780</td><td>1990</td><td>good</td><td>good</td><td>good</td><td>Example</td></tr>
<tr><td>28</td><td>K</td><td>100</td><td>0</td><td>5.0</td><td>1610</td><td>1900</td><td>good</td><td>good</td><td>good</td><td>Example</td></tr>
<tr><td>29</td><td>L</td><td>98</td><td>2</td><td>4.1</td><td>3390</td><td>1830</td><td>good</td><td>good</td><td>good</td><td>Example</td></tr>
<tr><td>30</td><td>M</td><td>100</td><td>0</td><td>6.0</td><td>3070</td><td>2170</td><td>good</td><td>good</td><td>good</td><td>Example</td></tr>
<tr><td>31</td><td>N</td><td>100</td><td>0</td><td>6.1</td><td>1770</td><td>2320</td><td>good</td><td>good</td><td>good</td><td>Example</td></tr>
<tr><td>32</td><td>O</td><td>100</td><td>0</td><td>3.1</td><td>730</td><td>1880</td><td>good</td><td>good</td><td>good</td><td>Example</td></tr>
<tr><td>33</td><td>O</td><td>100</td><td>0</td><td>2.8</td><td>830</td><td>1880</td><td>good</td><td>good</td><td>good</td><td>Example</td></tr>
<tr><td>34</td><td>O</td><td>100</td><td>0</td><td>2.8</td><td>830</td><td>1880</td><td>good</td><td>good</td><td>good</td><td>Example</td></tr>
<tr><td>35</td><td>O</td><td>100</td><td>0</td><td>2.8</td><td>730</td><td>1880</td><td>good</td><td>good</td><td>good</td><td>Example</td></tr>
<tr><td>36</td><td>O</td><td>100</td><td>0</td><td>2.8</td><td>630</td><td>1880</td><td>good</td><td>good</td><td>good</td><td>Example</td></tr>
<tr><td>37</td><td>P</td><td>100</td><td>0</td><td>4.7</td><td>2860</td><td>2100</td><td>good</td><td>good</td><td>good</td><td>Example</td></tr>
<tr><td>38</td><td>Q</td><td>100</td><td>0</td><td>6.7</td><td>1110</td><td>2270</td><td>good</td><td>good</td><td>good</td><td>Example</td></tr>
<tr><td>39</td><td>R</td><td>100</td><td>0</td><td>4.7</td><td>2340</td><td>1760</td><td>good</td><td>good</td><td>good</td><td>Example</td></tr>
</table>

(continued)

| | | Microstructure of hot-pressed member | | | | Mechanical properties of hot-pressed member | | | Edge cracking of hot-pressed member | Notes |
|---|---|---|---|---|---|---|---|---|---|---|
| No | Steel | Area fractions of martensite, tempered martensite, and bainite (%) | Area fraction of remaining microstructure (%) | Prior austenite average grain size ($\mu$m) | Density of Ti-Nb complex precipitate with grain size of 3 nm to 50 nm (/$\mu$m$^3$) | TS (MPa) | Delayed fracture resistance | Low-temperature toughness | | |
| 40 | S | 100 | 0 | 4.7 | 4250 | 2110 | good | good | good | Example |
| 41 | T | 100 | 0 | 5.9 | 2330 | 2340 | good | good | good | Example |
| 42 | U | 98 | 2 | 4.7 | 2940 | 1820 | good | good | good | Example |
| 43 | V | 95 | 5 | 4.0 | 4230 | 1800 | good | good | good | Example |
| 44 | a | 100 | 0 | 4.7 | 1520 | 1570 | good | good | good | Comparative example |
| 45 | b | 80 | 20 | 3.8 | 1500 | 1780 | good | poor | good | Comparative example |
| 46 | c | Not evaluated because cold rolling was impossible | | | | | | | | Comparative example |
| 47 | d | 100 | 0 | 4.3 | 910 | 1850 | poor | poor | good | Comparative example |
| 48 | e | 100 | 0 | 5.7 | 0 | 2120 | poor | good | good | Comparative example |
| 49 | f | 100 | 0 | 5.5 | 40 | 2010 | poor | good | good | Comparative example |

Table 5-2

Underline: indicates outside the scope of the present invention.

**Claims**

1. A steel sheet for hot pressing, comprising a chemical composition, on a mass percent basis, of

   C: 0.26% or more and 0.50% or less,
   Si: 0.01% or more and less than 1.0%,
   Mn: 1.0% or more and 3.0% or less,
   P: 0.10% or less,
   S: 0.010% or less,
   Al: 0.01% or more and 1.5% or less,
   N: 0.010% or less,
   Nb: 0.005% or more and 0.10% or less,
   B: 0.0005% or more and 0.020% or less,
   Ti: 3.4N + 0.01% or more and 3.4N + 0.2% or less [wherein N denotes the N content (% by mass)], and
   a remainder composed of Fe and incidental impurities,
   wherein ferrite constitutes 30% or more and 90% or less by area, pearlite constitutes 10% or more and 70% or less by area, and a remaining microstructure constitutes 5% or less by area,
   the ferrite has an average aspect ratio in the range of 2.0 or more and 12.0 or less, and the ferrite has an average minor axis length of 5.0 $\mu$m or less,
   the steel sheet contains 500 /$\mu$m$^3$ or more and 6000 /$\mu$m$^3$ or less of Ti-Nb complex precipitates with a grain size of 3 nm or more and 50 nm or less, and
   the steel sheet has a dislocation density of $1.0 \times 10^{15}$ /m$^2$ or more.

2. The steel sheet for hot pressing according to Claim 1, wherein the chemical composition further contains, on a mass percent basis, at least one selected from the group consisting of

   | | |
   |---|---|
   | Cr: | 1.0% or less, |
   | Cu: | 1.0% or less, |
   | Ni: | 1.0% or less, |
   | Sb: | 0.10% or less, and |
   | Sn: | 0.10% or less. |

3. The steel sheet for hot pressing according to Claim 1 or 2, wherein the chemical composition further contains, on a mass percent basis, at least one selected from the group consisting of

   Mo: 1.0% or less,
   V: 1.0% or less,
   Bi: 0.10% or less,
   Ca: 0.10% or less,
   Mg: 0.10% or less,
   REM: 0.10% or less,
   Co: 0.10% or less,
   Zr: 0.10% or less,
   Ta: 0.10% or less,
   W: 0.10% or less, and
   Zn: 0.10% or less.

4. The steel sheet for hot pressing according to any one of Claims 1 to 3, comprising a Zn-coated layer on a surface thereof.

5. A method for producing the steel sheet for hot pressing according to any one of Claims 1 to 3, comprising:

   heating a steel material to 1150°C or more;
   then, after rough rolling,
   performing hot rolling including finish rolling such that a total rolling reduction ratio below an RC temperature defined by the formula (1) in the finish rolling is 20% or more and 80% or less and a finish rolling end temperature is (RC - 200°C) or more and (RC - 20°C) or less;

then starting cooling within 2.0 seconds after completion of the finish rolling;

performing cooling at an average cooling rate of 30°C/s or more to a cooling stop temperature of 550°C or more and 700°C or less;

performing coiling at the cooling stop temperature;

then cooling the steel sheet from the cooling stop temperature to 500°C at an average cooling rate of 50°C/h or less; and

then, after pickling the steel sheet, cold-rolling the steel sheet at a rolling reduction ratio of 20% or more and 80% or less, RC (°C) = 850 + 100 × C + 100 × N + 10 × Mn + 700 × Ti + 5000 × B + 10 × Cr + 50 × Mo + 2000 × Nb + 150 × V    formula (1)

wherein each element symbol in the formula (1) is a corresponding element content (% by mass) of steel, and for an element not contained in the steel, the element symbol in the formula is 0.

6. The method for producing the steel sheet for hot pressing according to Claim 5, wherein a surface of the steel sheet is subjected to Zn-coating treatment.

7. A hot-pressed member comprising:

the chemical composition of the steel sheet for hot pressing according to any one of Claims 1 to 3,
wherein martensite, tempered martensite, and bainite constitute 90% or more and 100% or less by area in total, and the remaining microstructure constitutes 10% or less by area,
the hot-pressed member has a prior-austenite average grain size of 7.0 $\mu$m or less,
the hot-pressed member contains 500 /$\mu$m$^3$ or more and 6000 /$\mu$m$^3$ or less of Ti-Nb complex precipitates with a grain size of 3 nm or more and 50 nm or less, and
the hot-pressed member has a tensile strength of 1760 MPa or more.

8. The hot-pressed member according to Claim 7, comprising a Zn-coated layer on a surface thereof.

9. A method for producing a hot-pressed member, comprising: trimming the steel sheet for hot pressing according to any one of Claims 1 to 4 by shearing, heating the steel sheet to a temperature of an $A_{c3}$ transformation point or higher and 1000°C or less at an average heating rate of 3°C/s or more and 200°C/s or less, holding the steel sheet in this temperature range for 0 seconds or more and 300 seconds or less, and then hot-pressing the steel sheet at an Ms temperature or higher.

## INTERNATIONAL SEARCH REPORT

International application No.

**PCT/JP2022/033921**

### A. CLASSIFICATION OF SUBJECT MATTER

***C21D 9/00***(2006.01)i; ***C21D 9/46***(2006.01)i; ***C22C 38/00***(2006.01)i; ***C22C 38/16***(2006.01)i; ***C22C 38/60***(2006.01)i;
***C21D 1/18***(2006.01)i
FI: C22C38/00 301S; C22C38/00 301T; C22C38/60; C21D9/46 G; C21D9/46 J; C22C38/16; C22C38/00 301Z; C21D9/00
A; C21D1/18 C

According to International Patent Classification (IPC) or to both national classification and IPC

### B. FIELDS SEARCHED

Minimum documentation searched (classification system followed by classification symbols)

C21D9/00; C21D9/46; C22C38/00-38/60; C21D1/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2016/148045 A1 (KOBE STEEL LTD) 22 September 2016 (2016-09-22)<br>entire text | 1-9 |
| A | WO 2019/003450 A1 (JFE STEEL CORPORATION) 03 January 2019 (2019-01-03)<br>entire text | 1-9 |
| A | WO 2020/158285 A1 (JFE STEEL CORPORATION) 06 August 2020 (2020-08-06)<br>entire text | 1-9 |
| A | JP 2018-127646 A (JFE STEEL CORPORATION) 16 August 2018 (2018-08-16)<br>paragraph [0056] | 5-6 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **13 October 2022** | **08 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/033921**

| Patent document cited in search report | | | Publication date (day/month/year) | Patent family member(s) | | | Publication date (day/month/year) |
|---|---|---|---|---|---|---|---|
| WO | 2016/148045 | A1 | 22 September 2016 | (Family: none) | | | |
| WO | 2019/003450 | A1 | 03 January 2019 | US | 2020/0370140 | A1 | |
| | | | | entire text | | | |
| | | | | EP | 3647450 | A1 | |
| | | | | KR | 10-2020-0013703 | A | |
| | | | | CN | 110832097 | A | |
| | | | | WO | 2019/003542 | A1 | |
| WO | 2020/158285 | A1 | 06 August 2020 | US | 2022/0118741 | A1 | |
| | | | | entire text | | | |
| | | | | EP | 3919645 | A1 | |
| | | | | CN | 113366135 | A | |
| | | | | KR | 10-2021-0107806 | A | |
| JP | 2018-127646 | A | 16 August 2018 | (Family: none) | | | |

Form PCT/ISA/210 (patent family annex) (January 2015)

**REFERENCES CITED IN THE DESCRIPTION**

**Patent documents cited in the description**

- WO 2019003449 A

- JP 2007302937 A